# EUROPEAN PATENT SPECIFICATION

(11) **EP 3 731 053 B1**
(45) Date of publication and mention of the grant of the patent: **29.11.2023**
(21) Application number: 18907553.4
(22) Date of filing: 28.02.2018
(51) Int. Cl.: G05D 1/02, A01D 34/64

(54) **MANAGEMENT DEVICE, MANAGEMENT SYSTEM, MOVING BODY AND PROGRAM**
VERWALTUNGSVORRICHTUNG, VERWALTUNGSSYSTEM, BEWEGTKÖRPER UND PROGRAMM
DISPOSITIF DE GESTION, SYSTÈME DE GESTION, CORPS MOBILE ET PROGRAMME

(43) Date of publication of application: 28.10.2020
(73) Proprietor: HONDA MOTOR CO., LTD., Minato-ku Tokyo 107-8556 (JP)
(72) Inventor: SHIMAMURA Hideaki, Wako-shi, Saitama 351-0193 (JP); KAMEYAMA Naoki, Wako-shi, Saitama 351-0193 (JP); MURO Keiji, Wako-shi, Saitama 351-0193 (JP)
(74) Representative: Weickmann & Weickmann PartmbB
(86) International application number: PCT/JP2018/007657
(87) International publication number: WO 2019/167205

(56) References cited:
- WO-A1-03/004352
- WO-A1-2017/188706
- WO-A1-2017/216972
- WO-A1-2017/216972
- JP-A- 2016 186 751
- US-A1- 2002 153 185
- US-A1- 2014 032 034
- US-A1- 2015 012 164
- US-A1- 2015 212 500

## Description

### BACKGROUND

### 1. TECHNICAL FIELD

The present invention relates to a management apparatus, a management system, a moving object, and a program.

### 2. RELATED ART

In recent years, a work machine has been developed which autonomously travels inside a predetermined region with a positioning technique which utilizes a GPS signal (for example, see Patent document 1 or 2).

### [Prior art documents]

### [Patent document]

[Patent document 1] Japanese Unexamined Patent Application, Publication No. 2016-185099
[Patent document 2] Japanese Unexamined Patent Application, Publication No. 2013-223531
[Patent document 3] International Patent Application Publication No. 2017/216972 A1
[Patent document 4] United States Patent Application Publication No. 2002/153185 A1
[Patent document 5] International Publication No. 2017/188706 A1
[Patent document 6] United States Patent Application Publication No. 2015/212500 A1

Patent document 3 discloses an unmanned aircraft control system to fly while avoiding a flight prohibited area, which changes depending upon the movement of a mobile unit. The unmanned aircraft control system (1) includes a mobile unit position acquisition means (102) for acquring mobile unit position information relating to the current position of the mobile unit moving over the earth; an area setting means (103) for setting, on the basis of the mobile unit position information, a flight prohibited are where the flight of an unmanned aircraft (20) is prohibited; and a flight control means (105) for controlling the flight of the unmanned aircraft (20) so as to avoid the flight prohibited area set on the basis of the mobile unit position information.

Patent document 4 discloses a robot cleaner for performing a job while wirelessly communicating with an external device, including a driving portion for driving a plurality of wheels; at least one camera installed on a body of the robot cleaner, the camera for photographing external surroundings; and a controller for photographing an image through the camera for a recognition of a connection position where an external recharging device is connected with the robot cleaner and storing the photographed image, wherein the controller is used for controlling the driving portion so that the robot cleaner can move from the external recharging device to a destination when an operation start signal is received in the robot cleaner connected to the external recharging device, wherein the controller is used for tracing a path to the connection position of the external recharging device and the robot cleaner during a robot cleaner's return to the external recharging device while comparing a current image currently taken by the camera with a stored image of the connection position of the robot cleaner and the external recharging device.

Patent document 5 discloses a mobile robot for identifying a location on a map, and a mobile robot control method, and the mobile robot according to the present invention comprises: a traveling unit for moving a body; an image acquisition unit for acquiring surrounding images; and a control unit for recognizing a current location. The control unit divides a traveling zone into a plurality of large zones according to a predetermined criterion, extracts at least one recognition feature point from an image acquired at an unknown current location, generates a recognition descriptor corresponding to each recognition feature point, calculates each large zone feature distribution and the recognition descriptor according to a predetermined upper estimation rule so as to perform control such that any one large zone, to which the current location belongs, is selected. The control method according to the present invention comprises: a learning step of learning a traveling zone so as to generate a map, and dividing the traveling zone into a plurality of large zones according to a predetermined criterion; and a recognition step of selecting a current location on the map. The recognition step comprises a recognition descriptor generation step of acquiring an image at the current location, extracting at least one recognition feature point from the acquired image, and generating a recognition descriptor corresponding to each recognition feature point. The recognition step comprises a large zone selection step of selecting any one large zone to which the current location belongs by calculating each large zone feature distribution and the recognition descriptor according to a predetermined upper estimation rule.

Patent document 6 discloses a household electric appliance operation system including an operation signal transmitting section for transmitting, to a plurality of household electric appliances, an operation signal for controlling respective operations of the household electric appliances, the household electric appliance operation system including: a display section for displaying a layout image including (i) a layout outline image indicative of a shape of a region in which the operation signal transmitting section is present and (ii) at least one icon over the layout outline image which icon is of a household electric appliance present in the region; a storage section storing household electric appliance information indicative of an association, with one another, of (i) the at least one icon of the household electric appliance, (ii) one or more operation contents that the household electric appliance is capable of being instructed to perform, and (iii) operation signal information indicative of an operation signal for instructing the household electric appliance to perform an operation corresponding to the one or more operation contents; an instruction input section for receiving from a user (i) a selection instruction to select a household electric appliance as an operation target from among the at least one icon included in the layout image and (ii) an operation instruction to specify an operation content for the selected household electric appliance; and an operation signal generating section for generating the operation signal, indicated in the operation signal information, on a basis of (i) the household electric appliance information stored in the storage section and (ii) the selection instruction and the operation instruction both of which have been received by the instruction input section, the operation signal transmitting section transmitting the operation signal generated by the operation signal generating section. Another piece of particularly relevant prior art is US2014/032034 A1, which discloses a ground station transmitting the current location of an associated moving object as a return information.

### [Problems to be solved]

For example, if a failure occurs in a positioning section of the moving object or if a positioning precision of the positioning section of the moving object is relatively poor, it is expected that an internal sensor mounted on the moving object is utilized to estimate the self-location of the moving object. However, according to the above-described method, errors accumulate as the moving distance increases.

### [General Disclosure]

A first aspect of the present invention provides a management apparatus. For example, the above-described management apparatus manages the moving object having an autonomous movement function. For example, the above-described management apparatus includes the return information transmission section to transmit, at a predetermined time or at a predetermined time interval, to the moving object, the return information for the moving object to return from the current location of the moving object to the return destination of the moving object.

In the above-described management apparatus, the return information includes an estimation parameter used for a self-location estimation processing which calculates a relative locational relationship between a particular reference location and the moving object based on a controlling amount of a drive section of the moving object and estimates a location of the moving object based on the relative locational relationship. The moving object includes a self-location estimation section to calculate a relative locational relationship between a particular reference location and the moving object (150, 210) based on a controlling amount of a drive section of the moving object and to estimate a location of the moving object based on the relative locational relationship. The self-location estimation section is further configured to utilize the return destination as the reference location.

The above-described management apparatus may include the control signal communication section to transmit the control signal to control the moving object. The above-described management apparatus may include the failure information obtaining section to obtain the failure information indicating that a failure has occurred in the moving object or the management apparatus. The above-described management apparatus may include the instruction output section to output the instruction to generate a beacon signal indicating the return destination of the moving object if a failure indicated by the failure information obtained by the failure information obtaining section satisfies a predetermined condition.

In a second aspect of the present invention, a computer program including instructions is provided. For example, the above-described computer program, when executed on a computer, causes the management apparatus to perform each function as the above-described management apparatus.

In a third aspect of the present invention, a management system is provided. For example, the above-described management system includes the above-described management apparatus. The above-described management system includes a moving object, for example. For example, the above-described moving object includes a positioning section to position the location of the moving object. For example, the above-described moving object includes a self-location estimation section to calculate a relative locational relationship between a particular reference location and a moving object based on a controlling amount of the drive section of the moving object and estimate the location of the moving object based on the relative locational relationship. For example, the above-described moving object has a return information obtaining section to obtain the return information transmitted by the management apparatus. For example, the above-described moving object has a failure detection section to detect that a failure has occurred in the positioning section. For example, the above-described moving object includes a control section to control the drive section.

For example, in the above-described management system, the nominal precision of the positioning section is higher than the nominal precision of the self-location estimation section. For example, in the above-described management system, the control section (i) controls the drive section based on the location of the moving object positioned by the positioning section if the failure detection section has not detected the failure of the positioning section, and (ii) controls the drive section based on the location of the moving object estimated by the self-location estimation section and the return information obtained by the return information obtaining section if the failure detection section has detected the failure of the positioning section.

In a fourth aspect of the present invention, a management system is provided. For example, the above-described management system includes the above-described management apparatus. For example, the above-described management system includes a moving object. For example, in the above-described management system, the management apparatus includes a control signal communication section to transmit the control signal to control the moving object. For example, the moving object includes a self-location estimation section to calculate relative locational relationship between a particular reference location and a moving object based on the controlling amount of the drive section of the moving object and estimate the location of the moving object based on the relative locational relationship. For example, the moving object includes a control signal obtaining section to obtain the control signal transmitted by the management apparatus. For example, the moving object includes the return information obtaining section to obtain the return information transmitted by the management apparatus. For example, the moving object includes the failure detection section to detect that a failure has occurred in at least one of the management apparatus, the control signal communication section, and the control signal obtaining section. For example, the moving object includes a control section to control the drive section.

For example, in the above-described management system, the control section (i) controls the drive section based on the control signal obtained by the control signal obtaining section if the failure detection section has not detected a failure, and (ii) controls the drive section based on the location of the moving object estimated by the self-location estimation section and the return information obtained by the return information obtaining section if the failure detection section has detected the failure.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows one example of a system configuration of the management system 100.
Fig. 2 schematically shows one example of a system configuration of the management system 200.
Fig. 3 schematically shows one example of the internal configuration of a lawn mower 210.
Fig. 4 schematically shows one example of an internal configuration of the control unit 380.
Fig. 5 schematically shows one example of an internal configuration of the travel control section 420.
Fig. 6 schematically shows one example of an internal configuration of the management server 230. management server 230.
Fig. 7 schematically shows one example of an internal configuration of the equipment management section 640.

### DESCRIPTION OF EXEMPLARY EMBODIMENTS

Hereinbelow, the present invention will be described through embodiments of the invention, but the following embodiments do not limit the invention disclosed in claims. In addition, not all combinations of features described in the embodiments are necessarily essential to the solution of the invention. Note that in the drawings, the same reference numerals may be applied to the same or similar portions and the redundant descriptions may be omitted. In addition, two or more elements which each have the same name and have different reference numbers may have the configuration similar to each other as long as there is no technically serious contradiction.

### [Outline of Management System 100]

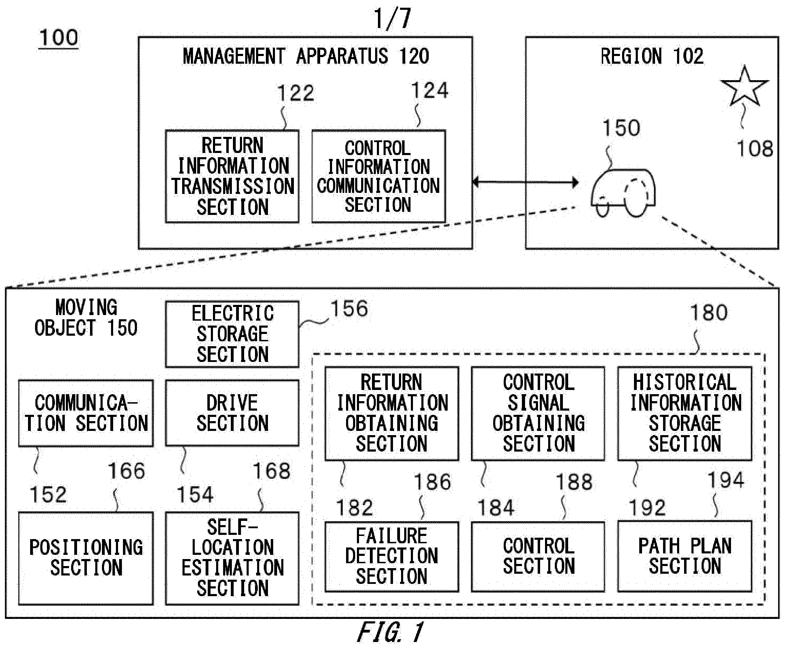

Fig. 1 schematically shows one example of a system configuration of the management system 100. In the present embodiment, the management system 100 includes the management apparatus 120 and the one or more moving object 150. Fig. 1 schematically shows one example of an internal configuration of the management apparatus 120. In the present embodiment, the management apparatus 120 includes the return information transmission section 122 and the control signal communication section 124. The control signal communication section 124 may be one example of a control signal transmission section.

Fig. 1 schematically shows one example of an internal configuration of the moving object 150. In the present embodiment, the moving object 150 includes, for example, the communication section 152 and the drive section 154. The moving object 150 includes, for example, the electric storage section 156. The moving object 150 includes, for example, the positioning section 166. The moving object 150 includes, for example, the self-location estimation section 168. In the present embodiment, the control apparatus 180 has, for example, the return information obtaining section 182. The control apparatus 180 has, for example, the control signal obtaining section 184. The control apparatus 180 has, for example, the failure detection section 186. The control apparatus 180 has, for example, the control section 188. The control apparatus 180 has, for example, the historical information storage section 192. The control apparatus 180 has, for example, the path plan section 194.

In one embodiment, the moving object 150 includes the positioning section 166, the self-location estimation section 168, and the return information obtaining section 182. In this case, the moving object 150 may include the failure detection section 186 and the control section 188. The moving object 150 may further include the communication section 152 and the drive section 154.

In another embodiment, the moving object 150 includes the self-location estimation section 168, the return information obtaining section 182, and the control signal obtaining section 184. In this case, the moving object 150 may include the failure detection section 186 and the control section 188. The moving object 150 may further include the communication section 152 and the drive section 154.

In yet another embodiment, the moving object 150 includes the historical information storage section 192 and the path plan section 194. In this case, the moving object 150 may include the electric storage section 156. The moving object 150 may further include the drive section 154 and the control section 188.

### [Outline of Management Apparatus 120]

In the present embodiment, the management apparatus 120 manages each of one or more moving objects 150. The management apparatus 120 may manage the movement or location of each of one or more moving objects 150. For example, the management apparatus 120 manages the moving path of each of one or more moving objects 150. The management apparatus 120 manages a return path to the return destination 108 for each of one or more moving object 150.

In the present embodiment, the return information transmission section 122 transmits return information to the moving object 150 at a predetermined timing. Examples of the predetermined timing include a predetermined time, a predetermined time interval, a time when a predetermined event occurs, and the like. Thereby, even if a failure occurs in the function of the management apparatus 120 or the moving object 150 to manage a location of the moving object 150, the moving object 150 can return to a return destination or the vicinity of the return destination by utilizing return information.

The return information may be information which allows the moving object 150 to return from the current location of the moving object 150 at the time point when the return information is generated, to the return destination 108 of the moving object 150. The return information includes information indicating, for example, at least one of (i) the current location of the moving object 150, (ii) the direction of the return destination 108 viewed from the current location of the moving object 150, (iii) the route from the current location of the moving object 150 to the return destination 108 of the moving object 150, and (iv) a parameter (also referred to as an estimation parameter) used for a self-location estimation processing in the moving object 150.

The estimation parameter may be a parameter utilized, in the self-location estimation processing in the moving object 150, to estimate the self-location based on the output from one or more internal sensors. The estimation parameter may be a parameter indicating the relationship between the controlling amount of the drive section 154 in the moving object 150 and at least one of the moving distance and the moving direction of the moving object 150. The estimation parameter may be a parameter indicating the relationship between the output from one or more internal sensors mounted on the moving object 150 and at least one of the moving distance and the moving direction of the moving object 150.

The estimation parameter may be a parameter indicating the relationship between the output from the wheel speed sensor or the rotary encoder mounted on the moving object 150 and the moving distance of the moving object 150. The estimation parameter may be a parameter indicating the relationship between the output from the gyro sensor or the acceleration sensor mounted on the moving object 150 and the moving direction of the moving object 150.

For example, the return information transmission section 122 periodically obtains output data from one or more internal sensor mounted on the moving object 150 and monitors the output of the internal sensor. On the other hand, the return information transmission section 122 may periodically obtain information indicating a location of the moving object 150 determined based on (i) the output data from one or more external sensors mounted on the moving object 150 or (i) the output from the external sensor. The return information transmission section 122 may periodically obtain the output data from one or more sensors arranged outside the moving object 150. For example, the return information transmission section 122 calculates a location of the moving object 150 by utilizing obtained various types of information and monitors the location of the moving object 150. It is noted that the return information transmission section 122 may collect the above-described information in any timing.

The return information transmission section 122 may calculate an estimation parameter based on the output of one or more internal sensors mounted on the moving object 150 and the calculated location of the moving object 150. The return information transmission section 122 may (i) calculate the current value of an estimation parameter, and (ii) may calculate the current value of the estimation parameter and the prediction value of the estimation parameter or the predicting function of the estimation parameter at any time point in the future.

It is noted that, in the present embodiment, an example is described where the return information transmission section 122 obtains various types of information and calculates a location of the moving object 150 based on the information. However, the return information transmission section 122 is not limited to the present embodiment. In another embodiment, the return information transmission section 122 may obtain information indicating a location of the moving object 150 calculated from another component of the management system 100.

Herein, a possible method to identify a location of the moving object 150 with an autonomous movement function may include (i) a method to utilize output data from one or more sensors arranged outside the moving object 150, (ii) a method to utilize output data from one or more external sensors mounted on the moving object 150, (iii) a method to utilize output data of one or more internal sensors mounted on the moving object 150, and (iv) a combination thereof. Examples of the sensor arranged outside the moving object 150 include a camera, a non-contact proximity sensor, a contact detection sensor, a beacon signal receiver, and the like. Examples of the external sensor include a camera, a proximity detection sensor, a contact detection sensor, a beacon signal receiver, a positioning signal receiver, a magnetic sensor, and the like. Examples of the internal sensor include a wheel speed sensor, a rotary encoder, a gyro sensor, an acceleration sensor, and the like.

In the self-location estimation processing, a location of the moving object 150 is estimated based on the information indicating a particular reference location and the output data from one or more internal sensor mounted on the moving object 150. According to one embodiment of the self-location estimation processing, a relative locational relationship between the particular reference location and the moving object 150 is calculated based on the controlling amount of the drive section 154 in the moving object 150. Then, the location of the moving object 150 is estimated based on the relative locational relationship described above. Specifically, the information indicating an estimated location of the moving object 150 is calculated based on the information indicating the location of the particular reference location described above and the information indicating a relative locational relationship described above.

Any location may be selected as a reference location used for the self-location estimation processing. According to one embodiment, the return destination 108 is utilized as the reference location. According to another embodiment, if the positioning precision of locational information based on the positioning signal is better than a predetermined precision in a particular location, the location may be utilized as the reference location. The controlling amount of the drive section 154 is determined based on the output data from one or more internal sensors. The controlling amount of the drive section 154 is determined based on, for example, the output data from the wheel speed sensor or the rotary encoder. The controlling amount of the drive section 154 may be determined based on, for example, the output data from the wheel speed sensor or the rotary encoder, and the output data from at least one of the gyro sensor and the acceleration sensor.

According to the self-location estimation processing, errors accumulate as the moving object 150 moves. Therefore, according to the self-location estimation processing, the estimation precision of a location decreases as the moving distance of the moving object 150 increases. On the other hand, in the positioning process which utilizes a wireless signal for positioning (also referred to as positioning signal), (i) the receiver mounted on the moving object 150 receives the positioning signal and (ii) the location of the moving object 150 is positioned based on the information indicated by the received positioning signal. Therefore, the positioning precision depends on the receiving condition of the positioning signal, and does not depend on the moving distance of the moving object 150. Examples of the positioning signal include the radio signal for the satellite positioning system (also referred to as satellite navigation system), the radio signal for the Global Navigation Satellite System (GNSS), the radio signal for the Global Positioning System (GPS), the radio signal for the Quasi-Zenith Satellite System, and the like.

In the present embodiment, the control signal communication section 124 transmits a control signal to control the moving object 150. The control signal may be a signal to remotely operate the moving object 150. The control signal may be a signal to control the autonomous movement of the moving object 150. The control signal may be a signal to control the movement of the moving object 150. If the moving object 150 performs a particular work while moving, the control signal may be a signal to control the work of the moving object 150.

Thereby, even if (i) the moving object 150 cannot utilize the positioning system with a wireless signal for positioning, or (ii) the precision of the positioning system with the wireless signal for positioning is not good, the control apparatus 180 of the moving object 150 can control the movement of the moving object 150 by utilizing the control signal from the control signal communication section 124. Examples of the case where the moving object 150 cannot utilize the positioning system with the wireless signal for positioning include a case where the moving object 150 does not include the positioning system, a case where a failure occurs in the positioning system mounted on the moving object 150, and the like.

Examples of a signal to control the movement of the moving object 150 include (i) a signal to specify the controlling amount of the drive section 154 of the moving object 150 to move the moving object 150 along a particular path, (ii) a signal to specify the moving path of the moving object 150, (iii) a signal to specify the move mode of the moving object 150 in a particular region inside the region 102, (iv) a signal to specify a plurality of regions inside the region 102 and specify the order with which the moving object 150 moves through the plurality of regions, (v) a signal to allow the moving object 150 to return to the return destination 108, and the like. The signal to specify the controlling amount of the drive section 154 in the moving object 150 may be one example of the signal to remotely operate the moving object 150.

Examples of a signal to control the work of the moving object 150 include (i) a signal to specify the controlling amount of the drive section 154 in the moving object 150 to allow the moving object 150 to perform a particular work, (ii) a signal to specify a type of the work which is performed by the moving object 150, (iii) a signal to specify the work mode of the moving object 150, (iv) a signal to specify the timing at which the moving object 150 performs the work, (v) a signal to specify the timing at which the moving object 150 stops the work, and the like. Examples of a type of the work include (i) civil engineering work, (ii) construction work, (iii) cultivation work for plant or agricultural product, (iv) snow clearing work, and the like. Examples of a cultivation work include sowing, pruning, lawn mowing, grass cutting, watering, fertilizing, soiling, weeding, and the like. The signal to specify the controlling amount of the drive section 154 in the moving object 150 may be one example of the signal to remotely operate the moving object 150.

For example, the control signal communication section 124 periodically obtains output data from one or more sensors mounted on the moving object 150 and output data from one or more sensors arranged outside the moving object 150. It is noted that the control signal communication section 124 may collect the above-described information at any timing. The control signal communication section 124 calculates, for example, a location of the moving object 150 utilizing various types of information which is obtained and monitors a location of the moving object 150. In addition, the control signal communication section 124 may monitor the work of the moving object 150.

The control signal communication section 124 plans, for example, the moving path of the moving object 150. The control signal communication section 124 may (i) compare the above-described plan and the current location of the moving object 150 and (ii) determine the controlling amount of the drive section 154 to move the moving object 150 along a planned moving path. Thereby, the control signal communication section 124 can generate a signal to specify the controlling amount of the drive section 154 in the moving object 150.

The control signal communication section 124 obtains, for example, the work schedule of the moving object 150. The work schedule may be the information indicating the period in which the work is performed and the content of the work in a particular point or region inside the region 102. The control signal communication section 124 may (i) compare the above-described work schedule and the current location of the moving object 150, and (ii) determine the controlling amount of the drive section 154 to allow the moving object 150 to perform the work in a manner defined in the work schedule. Thereby, the control signal communication section 124 can generate a signal to specify the controlling amount of the drive section 154 in the moving object 150.

It is noted that, in the present embodiment, an example is described where the control signal communication section 124 obtains various types of information and calculates a location of the moving object 150 based on the information. However, the control signal communication section 124 is not limited to the present embodiment. In another embodiment, the control signal communication section 124 may obtain information indicating a location of the moving object 150 calculated by another component in the management system 100.

In addition, in the present embodiment, an example has been described in which the control signal communication section 124 plans the moving path of the moving object 150. However, the control signal communication section 124 is not limited to the present embodiment. In another embodiment, the control signal communication section 124 may obtain information indicating a moving path of the moving object 150 calculated by another component in the management system 100.

In the present embodiment, the move mode defines at least one of (i) the moving pattern and (ii) the interval of a moving path. Examples of the moving pattern include (i) a moving pattern along a path on which locational coordinates of a plurality of points are predetermined, (ii) a moving pattern along a path whose shape and size are defined by a predetermined function, (iii) a moving pattern along a boundary of a particular region, (iv) a moving pattern along a path which has a shape similar to a boundary shape of a particular region, (v) a moving pattern along a path which has a spiral shape oriented from the boundary side to the central side of a particular region (the shape of the spiral is not specifically limited), (vi) a moving pattern along a path which has a spiral shape oriented from the central side to the boundary side of a particular region (the shape of the spiral is not specifically limited), (vii) a moving pattern along a path which has a zigzag shape, (viii) a moving pattern along a path which has a square wave shape, (ix) a moving pattern to, after arriving any boundary, turn toward a direction determined based on any probability model (for example a direction determined randomly) and continue to move, (x) a moving pattern while straight moving and turning are repeated such that a plurality of parallel paths are arranged without gaps, and the like.

In the present embodiment, the work mode defines at least one of (i) whether or not the work can be performed, and (ii) the work intensity. Examples of the work mode include (i) a mode in which a work is performed during a moving period, (ii) a mode in which a work is stopped or suspended during a moving period, (iii) a mode in which a work is performed during a straight moving period, but a work is stopped or suspended during a turning operation, and the like. Other examples of the work mode include (iv) a mode in which a return to the return destination 108 is performed, (v) a mode in which a moving from the return destination 108 to the work-starting location of a desired work is performed, and the like.

Another example of the work mode includes (i) a mode in which the work intensity is relatively large, (ii) a mode in which the work intensity is moderate, (iii) a mode in which the work intensity is relatively small, and the like. Examples of the work intensity include a work frequency in a particular period, a work amount per work, a total work amount in a particular period, and the like. The work intensity may be represented with consecutive numerical values or may be represented with a stepwise segmentation. Each segment may be distinguished with symbols or characters, or may be distinguished with numbers.

### [Outline of Moving Object 150]

In the present embodiment, the moving object 150 has the autonomous movement function. For example, the moving object 150 autonomously moves inside the region 102. The moving object 150 waits at the return destination 108 when it is not move inside the region 102. The return destination 108 may be arranged inside the region 102, or may be arranged outside the region 102. The return destination 108 may be arranged in the vicinity of the region 102. At the return destination 108, a replenishing apparatus which replenishes energy or consumables to the moving object 150 may be arranged (not illustrated in the figure). At the return destination 108, a structure to accommodate the moving object 150 may be arranged.

In the present embodiment, the communication section 152 transmits and receives information with the management apparatus 120. Thereby, the moving object 150 can include the communication function.

In the present embodiment, the drive section 154 drives the moving object 150. The drive section 154 may move the moving object 150 by driving a propulsion member such as a wheel, an endless track, a propeller, and a screw. The drive section 154 may allow the moving object 150 to perform the work by driving the member corresponding to the work of the moving object 150. The drive section 154 may have a power source such as an electric motor, an engine, and the like. The drive section 154 may have an electric motor which utilizes an electrical power provided from the electric storage section 156. The drive section 154 may drive the moving object 150 based on the instruction from the control apparatus 180.

In the present embodiment, the electric storage section 156 accumulates electrical power. The electric storage section 156 accumulates, for example, electrical power supplied from a charging equipment arranged at the return destination 108. The electric storage section 156 supplies electrical power to each portion of the moving object 150.

In the present embodiment, the positioning section 166 positions the location of the moving object 150. The positioning section 166 receives the wireless signal for positioning and positions the location of the moving object 150 based on the information indicated by the wireless signal. In the present embodiment, the self-location estimation section 168 estimates the location of the moving object 150 based on the output from the internal sensor mounted on the moving object 150. For example, the self-location estimation section 168 calculates the relative locational relationship between the particular reference location and the moving object based on the controlling amount of the drive section of the moving object by the drive section 154 in the moving object 150. The self-location estimation section 168 estimates the location of the moving object 150 based on the above-described relative locational relationship.

More specifically, the self-location estimation section 168 calculates the relative locational relationship between the particular reference location and the moving object based on the output from the rotary encoder measuring the rotation angle or rotation number of the wheel and the output from the gyro sensor sensing the posture of the moving object 150. The self-location estimation section 168 estimates the location of the moving object 150 based on the above-described relative locational relationship.

The nominal precision of the positioning section 166 may be higher than the nominal precision of the self-location estimation section 168. The nominal precision of the positioning section 166 may be higher than the nominal precision of the self-location estimation section 168 in a case where the moving distance exceeds 500 m, may be higher than the nominal precision of the self-location estimation section 168 in a case where the moving distance exceeds 300 m, may be higher than the nominal precision of the self-location estimation section 168 in a case where the moving distance exceeds 100 m, may be higher than the nominal precision of the self-location estimation section 168 in a case where the moving distance exceeds 50 m, may be higher than the nominal precision of the self-location estimation section 168 in a case where the moving distance exceeds 30 m, or may be higher than the nominal precision of the self-location estimation section 168 in a case where the moving distance exceeds 10 m.

In the present embodiment, the control apparatus 180 controls the moving object 150. More specifically, the control apparatus 180 controls the operation of the moving object 150. Examples of the operation of the moving object 150 include an operation related to the movement of the moving object 150, an operation related to the work of the moving object 150, and the like. Thereby, the moving object 150 can include the autonomous movement function.

In the present embodiment, the return information obtaining section 182 obtains the return information transmitted by the return information transmission section 122 of the management apparatus 120. The return information obtaining section 182 transmits the return information to the control section 188. In the present embodiment, the control signal obtaining section 184 obtains the control signal transmitted by the control signal communication section 124 of the management apparatus 120. The control signal obtaining section 184 transmits the control signal to the control section 188.

The failure detection section 186 detects a failure which occurs in at least part of the management system 100. If a failure in the moving object 150 is detected, the failure detection section 186 transmits information indicating that the failure has been detected to the control section 188. In this case, the failure detection section 186 may transmit information indicating that a failure of the moving object 150 has been detected to the management apparatus 120.

In one embodiment, the failure detection section 186 detects that a failure has occurred in the positioning section 166. For example, when no output from the positioning section 166 has been detected for a predetermined period, the failure detection section 186 detects that a failure has occurred in the positioning section 166 in a case where the positioning precision of the positioning section 166 is lower than the predetermined precision, and the like.

In another embodiment, the failure detection section 186 detects that a failure has occurred in at least one of the management apparatus 120, the control signal communication section 124, and the control signal obtaining section 184. For example, if the failure detection section 186 receives the information indicating that a failure has occurred in at least a part of the management apparatus 120 from the management apparatus 120, the failure detection section 186 detects that a failure has occurred in the management apparatus 120.

If the return information obtaining section 182 and the control signal obtaining section 184 obtain no information from the management apparatus 120 for a predetermined period, the failure detection section 186 may detect that a failure has occurred in the management apparatus 120. In this case, the failure detection section 186 may inquire of the management apparatus 120 whether or not a failure has occurred in the management apparatus 120.

If the control signal obtaining section 184 obtains no control signal from the management apparatus 120 for a predetermined period, the failure detection section 186 may detect that a failure has occurred in the control signal communication section 124. In this case, the failure detection section 186 may inquire of the management apparatus 120 whether or not a failure has occurred in the management apparatus 120 or the control signal communication section 124.

If the control signal obtaining section 184 outputs no control signal to the control section 188 for a predetermined period, the failure detection section 186 may detect that a failure has occurred in the control signal obtaining section 184. In this case, the failure detection section 186 may perform a test on the control signal obtaining section 184 to determine the presence or absence of a failure.

The control section 188 controls the drive section 154. Thereby, the control section 188 can control the operation of the moving object 150. The control section 188 can determine the controlling amount of the drive section 154 based on, for example, at least one of (i) the location of the moving object 150 positioned by the positioning section 166, (ii) the location of the moving object 150 estimated by the self-location estimation section 168, and (iii) the control signal obtained by the control signal obtaining section 184.

In one embodiment, the failure detection section 186 may detect that a failure has occurred in the positioning section 166. Therefore, according to the present embodiment, (i) if the failure detection section 186 does not detect a failure of the positioning section 166, the control section 188 controls the drive section 154 based on the location of the moving object 150 positioned by the positioning section 166. On the other hand, (ii) if the failure detection section 186 detects a failure of the positioning section 166, the control section 188 controls the drive section 154 based on the location of the moving object 150 estimated by the self-location estimation section 168 and the return information obtained by the return information obtaining section 182.

The nominal precision of the positioning section 166 may be better than the nominal precision of the self-location estimation section 168. Therefore, according to the present embodiment, the control section 188 usually determines the current location of the moving object 150 based on the output from the positioning section 166. On the other hand, if a failure has occurred in the positioning section 166, the control section 188 determines the current location of the moving object 150 based on the output from the self-location estimation section 168. In addition, the control section 188 determines the controlling amount of the drive section 154 based on (i) the current location of the moving object 150 and (ii) at least one of a configuration related to movement, a configuration related to work, information related to a moving path, and information related to a work schedule.

In general, as the moving distance from the reference location increases, the estimation precision of the location by the self-location estimation section 168 decreases. In this regard, according to the present embodiment, if a failure of the positioning section 166 is detected, the control section 188 controls the drive section 154 by utilizing the return information obtained by the return information obtaining section 182. The return information includes various types of information useful for a moving object 150 to return to the return destination 108. For example, the return information includes an estimation parameter calculated based on the latest information. The self-location estimation section 168 estimates the location of the moving object 150 by utilizing the estimation parameter included in the return information so that the estimation precision of the location of the moving object 150 improves. Thereby, even if a failure has occurred in the positioning section 166, the moving object 150 can return to the vicinity of the return destination 108 or the return destination 108.

In addition, the self-location estimation section 168 may estimate the self-location of the moving object 150 even while the control section 188 is determining the current location of the moving object 150 based on the output from the positioning section 166. Then, when a failure of the positioning section 166 is detected, the self-location estimation section 168 may determine the reference location used for the self-location estimation processing among the locations of the moving object 150 determined based on the output from the positioning section 166 before the failure of the positioning section 166 was detected. Thereby, the estimation precision of the location by the self-location estimation section 168 improves as compared with a case where the return destination 108 is used as the reference location.

In another embodiment, the failure detection section 186 may detect a that failure has occurred in the positioning section 166. Therefore, according to the present embodiment, (i) if the failure detection section 186 has not detected a failure of the positioning section 166, the control section 188 controls the drive section 154 based on the location of the moving object 150 positioned by the positioning section 166. On the other hand, (ii) if the failure detection section 186 has detected a failure of the positioning section 166, the control section 188 may control the drive section 154 based on the control signal obtained by the control signal obtaining section 184.

If the control signal obtaining section 184 can receive the control signal, the control section 188 can control the drive section 154 with a remote operation by the management apparatus 120. Thereby, even if a failure has occurred in the positioning section 166, the moving object 150 can return to the vicinity of the return destination 108 or the return destination 108.

In yet another embodiment, the failure detection section 186 may detect that a failure has occurred in at least one of the management apparatus 120, the control signal communication section 124, and the control signal obtaining section 184. Therefore, according to the present embodiment, (i) if the failure detection section 186 has detected no failure, the failure detection section 186 controls the drive section 154 based on the control signal obtained by the control signal obtaining section 184. On the other hand, (ii) if the failure detection section 186 detects a failure, the control section 188 controls the drive section 154 based on the location of the moving object 150 estimated by the self-location estimation section 168 and the return information obtained by the return information obtaining section 182.

As described above, if the moving object 150 does not include the positioning section 166, or even if a failure has occurred in the positioning section 166 mounted on the moving object 150, the control section 188 can control the movement of the moving object 150 when the control signal obtaining section 184 can receive the control signal. However, if a failure has occurred in at least one of the management apparatus 120, the control signal communication section 124, and the control signal obtaining section 184, there is a possibility that the control signal obtaining section 184 cannot normally obtain the control signal. Even in this case, according to the present embodiment, the moving object 150 can return to the vicinity of the return destination 108 or the return destination 108.

In the present embodiment, the historical information storage section 192 stores various types of information related to the history of the moving object 150. In one embodiment, the historical information storage section 192 stores information related to the moving history of the moving object 150. The moving history may be the information in which the information indicating the time is associated with the information indicating the location of the moving object 150 at the time. The moving history may be the information in which the information indicating the time is associated with the information indicating at least one of the moving direction, the moving speed, and the move mode of the moving object 150 at the time.

In another embodiment, the historical information storage section 192 stores the information related to the work history of the moving object 150. The work history may be the information in which the information indicating the time is associated with the information related to the work of the moving object 150 at the time. Examples of the information related to a work include the information indicating a type of the performed work, the information indicating the work mode of the performed work, the information indicating the work intensity of the performed work, and the like. The information related to the work history may be one example of the historical information.

In the present embodiment, the path plan section 194 plans the moving path of the moving object 150. The path plan section 194 may plan the moving path depending on the remaining level of the electric storage section 156. When the remaining level of the electric storage section 156 is low, the path plan section 194 may plan the moving path of the moving object 150 such that the moving object 150 exists in the vicinity of the return destination 108. (i) If it is determined that the remaining level of the electric storage section 156 satisfies the predetermined condition, the path plan section 194 may plan the moving path depending on the remaining level, and (ii) the path plan section 194 may plan at least a part of the moving path in a case where the remaining level of the electric storage section 156 satisfies the predetermined condition before it is determined that the remaining level of the electric storage section 156 satisfies the predetermined condition.

The path plan section 194 may plan the moving path based on the predetermined policy. The policy may be the information which associates the information indicating the condition related to the remaining level of the electric storage section 156 with the information indicating the region where the movement of the moving object 150 is allowed. The policy may be the information which associates the information indicating the condition related to the remaining level of the electric storage section 156, the information indicating the region where the movement of the moving object 150 is allowed, and the information indicating at least one of the move mode and the work mode in the region.

The policy may be set such that the moving object 150 exists in the vicinity of the return destination 108 when the remaining level of the electric storage section 156 is low. For example, the policy may be set such that the distance between the return destination 108 and the region where the movement of the moving object 150 is allowed when the remaining level of the electric storage section 156 is lower than a predetermined value is smaller than the distance between the return destination 108 and the region where the movement of the moving object 150 is allowed when the remaining level of the electric storage section 156 is higher than a predetermined value.

The policy may be set such that the number of the types of the move mode in the region where the movement of the moving object 150 is allowed when the remaining level of the electric storage section 156 is lower than a predetermined value is smaller than the number of the types of the move mode in the region where the movement of the moving object 150 is allowed when the remaining level of the electric storage section 156 is higher than a predetermined value. The policy may be set such that the combination of the types of the move mode in the region where the movement of the moving object 150 is allowed when the remaining level of the electric storage section 156 is smaller than a predetermined value is different from the combination of the types of the move mode in the region where the movement of the moving object 150 is allowed when the remaining level of the electric storage section 156 is higher than a predetermined value.

The policy may be set such that the number of the types of the work mode in the region where the movement of the moving object 150 is allowed when the remaining level of the electric storage section 156 is lower than a predetermined value is smaller than the number of the types of the work mode in the region where the movement of the moving object 150 is allowed when the remaining level of the electric storage section 156 is higher than a predetermined value. The policy may be set such that the combination of the types of the work mode in the region where the movement of the moving object 150 is allowed when the remaining level of the electric storage section 156 is smaller than a predetermined value is different from the combination of the types of the work mode in the region where the movement of the moving object 150 is allowed when the remaining level of the electric storage section 156 is higher than a predetermined value.

If the remaining level of the electric storage section 156 satisfies the predetermined first condition, the path plan section 194 may plan the return path for the moving object 150 to return to the return destination 108. The path plan section 194 may plan a return path such that the overlap between (i) the return path and (ii) the point or region which the moving object 150 passed until the remaining level of the electric storage section 156 satisfies a predetermined first condition after the moving object 150 returns to the return destination 108 last time (that is, the point or region which the moving object 150 passed until the remaining level of the electric storage section 156 satisfies the predetermined first condition after the moving object 150 starts from the return destination 108 this time). Examples of the first condition include a condition that the remaining level of the electric storage section 156 is lower than a predetermined value, a condition that the changing amount or changing speed of the remaining level of the electric storage section 156 exceeds a predetermined value, a combination thereof, and the like.

For example, the path plan section 194 plans the return path with reference to the historical information stored in the historical information storage section 192. For example, the path plan section 194 identifies the point or region where the moving object 150 performed the work, with reference to the historical information stored in the historical information storage section 192. Then, the path plan section 194 searches for a path which links the return destination 108 and the location of the moving object 150 at a time point when the remaining level of the electric storage section 156 is determined to satisfy the predetermined first condition, wherein the distance or the area of the overlapping portion between the path and the point or the region where the above-described moving object 150 performed the work satisfies the predetermined condition.

Examples of the predetermined condition include (i) a condition that the distance or the area of the above-described overlapping portion is minimum or substantially minimum, (ii) a condition that the distance or the area of the above-described overlapping portion is smaller than a predetermined value, (iii) a condition that a ratio of the distance or the area of the above-described overlapping portion to the distance or the area of the above-described path is smaller than a predetermined value, and the like. Being substantially minimum may mean that the error from the minimum value is about 10%.

Thereby, as compared with a provisional return path which includes relatively many paths included in the work history, a return path planned by the path plan section 194 has a smaller distance or area of the overlapping portion between the return path and the path included in the work history. The above-described provisional return path may be one example of the first path. The above-described provisional return path may be the path with the shortest distance which links the return destination 108 and the location of the moving object 150 at a time point when it is determined that the remaining level of the electric storage section 156 satisfies the predetermined first condition.

In the present embodiment, the control apparatus 180 has been described in detail using an embodiment where the control apparatus 180 is mounted on the moving object 150 as an example. However, the control apparatus 180 is not limited to the present embodiment. In another embodiment, a control apparatus 180 or a part of the control apparatus 180 may be arranged outside the moving object 150. The control apparatus 180 may be an information processing apparatus which can transmit and receive information with the moving object 150 via the communication network, and may be realized by the information processing apparatus. Some functions of the control apparatus 180 may be realized by the above-described information processing apparatus.

### [Specific configuration of each portion in the management system 100]

Each portion of the management system 100 may be realized by the hardware, may be realized by the software, or may be realized by the hardware and software. If at least a part of components (for example, the management apparatus 120 or the control apparatus 180) constituting the management system 100 is realized by a software, the component realized by the software may be realized by activating a program which defines the operation related to the component in an information processing apparatus with a general configuration.

The above-described information processing apparatus may include: (i) a data processing apparatus having processors such as a CPU or a GPU, a ROM, a RAM, a communication interface and the like, (ii) input apparatuses such as a keyboard, touch panel, camera, microphone, various types of sensors or GPS receiver, (iii) output apparatuses such as a display apparatus, a speaker or a vibration apparatus, and (iv) storage apparatuses (including external storage apparatuses) such as a memory or a HDD. In the above-described information processing apparatus, the above-described data processing apparatus or storage apparatus may store the above-described program. The above-described program causes the information processing apparatus described above to perform the operations defined by this program, by being executed by the processor. The above-described program may be stored in a non-transitory computer readable recording medium.

The above-described program may be a program which allows a computer to serve as the management apparatus 120 or the control apparatus 180. The above-described computer may be a computer which provides a cloud service or may be a computer which realizes a client server system. The above-described computer may be a computer mounted on the moving object 150.

The above-described program may be a program which allows a computer to perform one or more procedures related to various types of information processing in the management apparatus 120. The above-described information processing may be an information processing relates to a management method to manage the moving object 150. The above-described information processing may have a return information transmitting step to transmit, to the moving object 150 at a predetermined timing, the return information for the moving object 150 to return from the current location of the moving object 150 to the return destination 108 of the moving object 150.

The above-described program may be a program which allows a computer to perform one or more procedures related to various types of information processing in the control apparatus 180. One or more procedures related to the various types of information processing in the control apparatus 180 may be the procedures to control the drive section 154 of the moving object 150.

In one embodiment, the procedure to control the drive section 154 of the moving object 150 include, for example, a return information obtaining step to obtain the return information transmitted by the management apparatus 120. The procedure to control the drive section 154 of the moving object 150 includes, for example, a failure detection step to detect that a failure has occurred in the positioning section 166. The procedure to control the drive section 154 of the moving object 150 includes, for example, (i) a step to control the drive section 154 based on the location of the moving object 150 positioned by the positioning section 166 if a failure of the positioning section 166 has not been detected in the failure detection step. The procedure to control the drive section 154 of the moving object 150 includes, for example, (ii) a step to control the drive section 154 based on the location of the moving object 150 estimated by the self-location estimation section 168 and the return information obtained in the return information obtaining step if a failure of the positioning section 166 has been detected in the failure detection step.

In another embodiment, the procedure to control the drive section 154 of the moving object 150 includes, for example, a control signal obtaining step to obtain the control signal transmitted by the management apparatus 120. The procedure to control the drive section 154 of the moving object 150 includes, for example, a return information obtaining step to obtain the return information transmitted by the management apparatus 120. The procedure to control the drive section 154 of the moving object 150 includes, for example, a failure detection step to detect that a failure has occurred in at least one of the management apparatus 120, the control signal communication section 124, and the control signal obtaining section 184. The procedure to control the drive section 154 of the moving object 150 includes, for example, (i) a step to control the drive section 154 based on the control signal obtained in a control signal obtaining step if a failure has not been detected in the failure detection step. The procedure to control the drive section 154 of the moving object 150 includes, for example, (ii) a step to control the drive section 154 based on the location of the moving object 150 estimated by the self-location estimation section 168 and the return information obtained in the return information obtaining step if a failure has been detected in the failure detection step.

### [Outline of the management system 200]

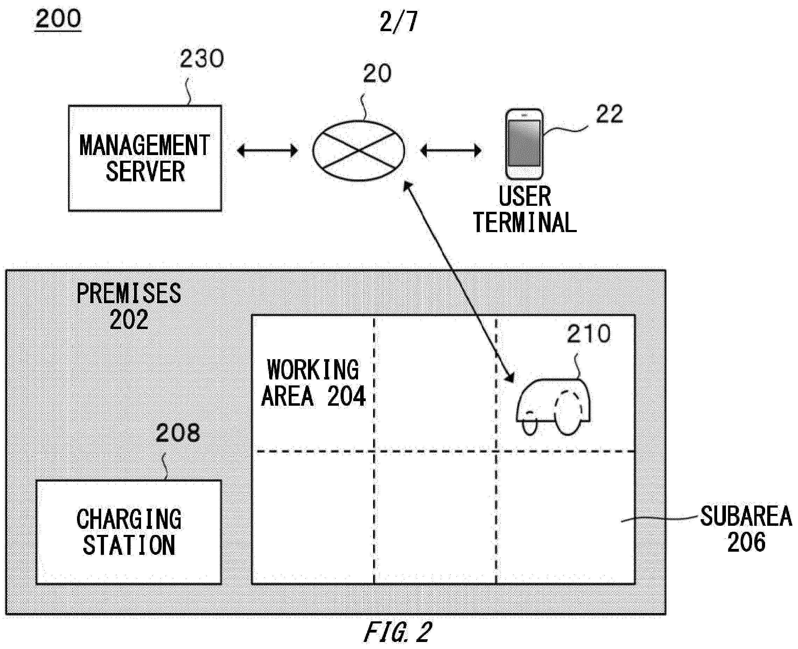

Fig.2 schematically shows one example of the system configuration in the management system 200. In the present embodiment, the management system 200 includes one or more lawn mowers 210 and the management server 230. The management system 200 may include one or more user terminals 22.

The lawn mower 210 may be one example of the moving object. The computer of the lawn mower 210 may be one example of the control apparatus. The management server 230 may be one example of the management apparatus.

In the present embodiment, for an easy description, the management system 200 is described in detail by using an example where the lawn mower 210 has an autonomous movement function and the computer mounted on the lawn mower 210 controls the operation of the lawn mower 210. However, the management system 200 is not limited to the present embodiment. In another embodiment, at least one of the user terminal 22 and the management server 230 may control the operation of the lawn mower 210. In this case, at least one of the user terminal 22 and the management server 230 may be one example of the control apparatus.

Each portion of the management system 200 may transmit and receive information with each other. For example, the lawn mower 210 transmits and receives information with at least one of the user terminal 22 and the management server 230 via the communication network 20.

In the present embodiment, the communication network 20 may be a wired communication transmission path, a wireless communication transmission path, or a combination of a wireless communication transmission path and a wired communication transmission path. The communication network 20 may include a wireless packet communication network, the Internet, a P2P network, a private line, a VPN, an electric power line communication line and the like. The communication network 20: (i) may include a mobile communication network such as a mobile phone line network; and (ii) may include a wireless communication network such as a wireless MAN (for example, WiMAX (registered trademark)), a wireless LAN (for example, WiFi (registered trademark)), Bluetooth (registered trademark), Zigbee (registered trademark) or NFC (Near Field Communication).

In the present embodiment, the user terminal 22 is a communication terminal utilized by a user of the management system 200 or the lawn mower 210, but the detail thereof is not specifically limited. Examples of the user terminal 22 include a personal computer, a mobile terminal, and the like. Examples of the mobile terminal include a mobile phone, a smartphone, a PDA, a tablet, a notebook computer, a laptop computer, a wearable computer, or the like.

In the present embodiment, the management system 200 manages the working region 204. For example, the management system 200 may manage a state of the object (also referred to as work target in some cases) on which a work is to be performed in the working region 204. The management system 200 may manage the work to be performed in the working region 204. For example, the management system 200 manages the schedule of the work. The work schedule may be the information which defines at least one of a period when the work is performed, a place where the work is performed, an entity which performs the work, a work target, and a content of the work.

In the present embodiment, the working region 204 is arranged inside the premises 202. Inside the premises 202, the charging station 208 which is the return destination of the lawn mower 210 is arranged in addition to the working region 204. It is noted that the charging station 208 may be arranged inside or in the vicinity of the working region 204. The charging station 208 may be one example of the return destination. The charging station 208 may have a configuration similar to that of the return destination 108.

In the present embodiment, a plurality of the subareas 206 is included inside the working region 204. The subareas 206 may include a region which is separated by a physical geographical boundary or may be a region which is separated by a virtual geographical boundary.

Examples of the physical geographical boundary include (i) a boundary defined by a structure formed naturally or artificially, (ii) a boundary defined by sprayed chemicals, (iii) a boundary defined by electromagnetic wave such as visible light, infrared light, ultraviolet light, and the like, (iv) a boundary defined by magnetic field, (v) a boundary defined by acoustic wave or ultrasonic sound wave, and the like. Examples of a structure formed naturally include a dent, a step, a slope, lake and reservoir, river, and the like. Examples of a structure formed artificially include a lane, a groove, a tunnel, a building, wire, a rope, a fence, a net, a Braille block, and the like. Examples of the virtual geographical boundary include a geofence, a virtual wire, and the like. The virtual wire may be a geographical boundary defined by a virtual line set among a plurality of structures.

The quantity of the subarea 206 included inside the working region 204 and a size and shape of the subarea 206 are not specifically limited. However, a plurality of the subareas 206 is preferably arranged uniformly inside the working region 204 such that there is no overlapped placement and no lack of placement. The plurality of subareas 206 may each have the same size or different size. The plurality of subareas 206 may each have the same shape or different shape.

The quantity of the subarea 206 arranged inside the working region 204 may be constant or variable. For example, a quantity of the subareas 206 arranged in a particular region which constitutes a part of the working region 204 is changed in response to occurrence of a predetermined event. Specifically, a plurality of the subareas 206 which are arranged adjacent to each other may be virtually combined to form a single subarea 206. The single subarea 206 may be virtually divided into a plurality of the subareas 206 which is arranged adjacent to each other. The quantity of the subarea 206 arranged in a particular region inside the working region 204 may be adjusted according to a required precision.

In the present embodiment, the management system 200 manages the lawn mower 210. The lawn mower 210 may be one example of an entity which performs the work. For example, the management system 200 manages a state of the lawn mower 210. For example, the management system 200 manages a location, an advancing direction, an advancing speed, a move mode, a work mode, a remaining level of energy (for example, a remaining level of the battery) of the lawn mower 210, a schedule of work performed by the lawn mower 210, and the like.

### [Outline of each portion of the management system 200]

In the present embodiment, the lawn mower 210 has an autonomous travel function. In the present embodiment, it autonomously travels inside the working region 204. It is noted that the lawn mower 210 may moves with a remote operation from the user terminal 22 or the management server 230. In the present embodiment, the lawn mower 210 performs a lawn mowing work. The lawn mower 210 may perform a work other than the lawn mowing. In the present embodiment, the lawn mower 210 performs a lawn mowing work inside the working region 204 and cuts plant such as lawn. The plant may be one example of the work target. On the other hand, the lawn mower 210 stops the lawn mowing work outside the working region 204 (also called non-working region). The lawn mower 210 will be described in detail later.

The lawn mower 210 may have a configuration similar to the moving object 150 as long as there is no technical contradiction. Similarly, the moving object 150 may have a configuration similar to that of the lawn mower 210 as long as there is no technical contradiction.

The moving object is not limited to the lawn mower 210. The moving object may be a moving object which travels on the ground, ma be a moving object flying in the air, or a moving object navigating under water or on water. Other specific examples of the moving object include a drone, a helicopter, an airship, and the like which fly in the air. The above-described moving object may have an autonomous movement function. The moving object may be a work machine which performs any works.

In the present embodiment, the management server 230 manages various types of information related to the working region 204. For example, the management server 230 manages geographical information related to the working region 204 (also referred to as map information in some cases). In one embodiment, the management server 230 manages the information indicating a location of the boundary of the working region 204. In another embodiment, it manages information which associates the information indicating a location of a particular point or region on the boundary of the working region 204 with the information indicating a content of operation of the lawn mower 210 in the point or region.

The management server 230 may manage a state of the equipment which configures the management system 200. The management server 230 may control an operation of the equipment which configures the management system 200. The management server 230 may manage the growing condition of plant. The management server 230 may manage various types of work performed in the working region 204. For example, the management server 230 creates a schedule of the above-described various types of works. The management server 230 may manage a progress of the schedule of the above-described various types of works. The management server 230 will be described in detail later.

### [Specific configuration of each portion in the management system 200]

Each portion of the management system 200 may be realized by the hardware, may be realized by the software, or may be realized by the hardware and software. At least a part of each portion in the management system 200 may be realized by a single server, or realized by a plurality of servers. At least a part of each portion in the management system 200 may be realized on a virtual server or a cloud system. At least a part of each portion in the management system 200 may be realized by a personal computer or a mobile terminal. Examples of the mobile terminal include a mobile phone, a smartphone, a PDA, a tablet, a notebook computer, a laptop computer, a wearable computer, or the like. The management system 200 may store information by utilizing a distributed ledger technology or a distributed network such as a block chain.

If at least a part of components constituting the management system 200 is realized by a software, the component realized by the software may be realized by activating a program which defines the operation related to the component in an information processing apparatus with a general configuration. The above-described information processing apparatus may include: (i) a data processing apparatus having processors such as a CPU or a GPU, a ROM, a RAM, a communication interface and the like, (ii) input apparatuses such as a keyboard, touch panel, camera, microphone, various types of sensors or GPS receiver, (iii) output apparatuses such as a display apparatus, a speaker or a vibration apparatus, and (iv) storage apparatuses (including external storage apparatuses) such as a memory or a HDD. In the above-described information processing apparatus, the above-described data processing apparatus or storage apparatus may store the above-described program. The above-described program causes the information processing apparatus described above to perform the operations defined by this program, by being executed by the processor. The above-described program may be stored in a non-transitory computer readable recording medium.

The above-described program may be a program which allows a computer to perform one or more procedures related to various types of information processing in the management system 200. The above-described program may be a program which allows a computer to serve as the control apparatus to control the lawn mower 210. The above-described computer may be a computer mounted on at least one of the user terminal 22, the lawn mower 210, and the management server 230.

Various types of information processing in the management system 200 may be an information processing related to the management method to manage the lawn mower 210. The information processing related to the management method to manage the lawn mower 210 may include a configuration similar to the information processing related to the management method to manage the moving object 150. One or more procedures related to various types of information processing in the management system 200 may be a procedure to control the lawn mower 210. The procedure to control the lawn mower 210 may have a configuration similar to that of the procedure to control the drive section 154 in the moving object 150.

### [Outline of Lawn Mower 210]

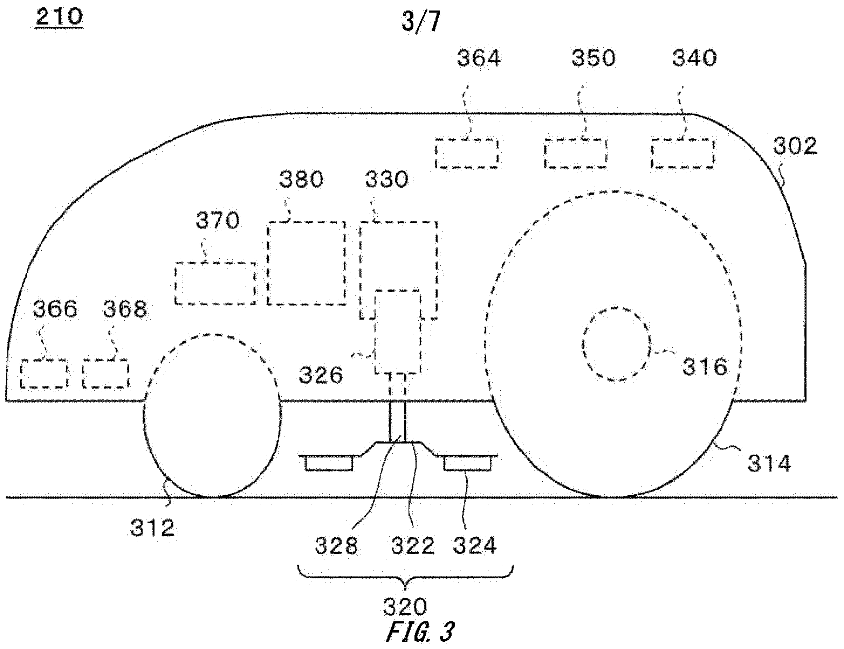

The outline of the lawn mower 210 will be described using Fig. 3, Fig. 4, and Fig. 5. Fig. 3 schematically shows one example of the internal configuration of the lawn mower 210. In the present embodiment, the lawn mower 210 includes the enclosure 302. In the present embodiment, the lawn mower 210 includes a pair of front wheels 312 and a pair of rear wheels 314 under the enclosure 302. The lawn mower 210 may include a pair of travel motors 316 which respectively drive a pair of rear wheels 314. The travel motor 316 may be one example of the drive section.

In the present embodiment, the lawn mower 210 includes the work unit 320. The work unit 320 includes, for example, the blade disk 322, the cutter blade 324, the work motor 326, and the shaft 328. The lawn mower 210 may include the location adjustment section 330 which adjusts the location of the work unit 320. The work motor 326 may be one example of the drive section.

The blade disk 322 is linked to the work motor 326 via the shaft 328. The cutter blade 324 may be a cutting blade which cuts lawn. The cutter blade 324 is attached to the blade disk 322 and rotates together with the blade disk 322. The work motor 326 rotates the blade disk 322. The blade disk 322 and the cutter blade 324 may be one example of the cutting member which cuts the work target.

In the present embodiment, the lawn mower 210 includes the battery unit 340, the user interface 350, the image-capturing unit 364, the GPS reception section 366, the location estimation section 368, the sensor unit 370, and the control unit 380 inside the enclosure 302 or on the enclosure 302. The battery unit 340 may be one example of the electric storage section. The GPS reception section 366 may be one example of the positioning section. The location estimation section 368 may be one example of the self-location estimation section. The control unit 380 may be one example of a control apparatus.

The battery unit 340 may have a configuration similar to the electric storage section 156 as long as there is no technical contradiction. Similarly, the electric storage section 156 may have a configuration similar to the battery unit 340 as long as there is no technical contradiction.

The GPS reception section 366 may have a configuration similar to the positioning section 166 as long as there is no technical contradiction. Similarly, the positioning section 166 may have a configuration similar to the GPS reception section 366 as long as there is no technical contradiction.

The location estimation section 368 may have a configuration similar to the self-location estimation section 168 as long as there is no technical contradiction. Similarly, the self-location estimation section 168 may have a configuration similar to the location estimation section 368 as long as there is no technical contradiction.

The control unit 380 may have a configuration similar to the control apparatus 180 as long as there is no technical contradiction. Similarly, the control apparatus 180 may have a configuration similar to the control unit 380 as long as there is no technical contradiction.

In the present embodiment, the battery unit 340 supplies electrical power to each portion of the lawn mower 210. In the present embodiment, the user interface 350 accepts a user input. The user interface 350 outputs information to a user. Examples of the user interface 350 include a keyboard, a pointing apparatus, a microphone, a touch panel, a display, a speaker, and the like.

In the present embodiment, the image-capturing unit 364 captures the image of the circumference of the lawn mower 210. The image-capturing unit 364 may capture the image of at least part of the working region 204. The image-capturing unit 364 may transmit data of the captured image to the management server 230. The image may be a video image or may be a static image. The image may be a wide angle image, or may be a 180 degree panoramic image or may be a 360 degree panoramic image. The image may be an image captured by a visible light camera, or an image captured by an infrared camera.

The image-capturing unit 364 may transmit the information indicating at least one of an image-capturing time, an image-capturing direction, and an image-capturing condition to the management server 230. Examples of the image-capturing condition include a zoom magnification, an aperture, whether an optical filter exists or whether an optical filter is needed, a type of an optical filter, a resolution, a shatter speed, a frame rate, an ISO sensitivity, a capturing altitude, an angle of view, a focal length, a render settings, and the like. The image-capturing unit 364 may perform various types of processing based on the control signal from the control unit 380. Examples of the above-described process include starting an image-capturing, stopping an image-capturing, adjusting or changing an image-capturing direction, adjusting or changing an image-capturing condition, saving an image data, transmitting an image data, and the like.

In the present embodiment, the GPS reception section 366 receives a GPS signal from a positioning satellite. The GPS reception section 366 may analyze a GPS signal and position a location of the lawn mower 210 at the point where the GPS signal is received. The GPS reception section 366 may output the information indicating a location of the lawn mower 210. The GPS reception section 366 may output he information indicating the positioning precision.

In the present embodiment, the location estimation section 368 estimates a location of the lawn mower 210 based on the output from the internal sensor mounted on the lawn mower 210. For example, the location estimation section 368 obtains output data from the internal sensor included in the sensor unit 370. The location estimation section 368 analyzes output data from the above-described internal sensor and estimates a location of the lawn mower 210. The location estimation section 368 outputs the information indicating a location of the lawn mower 210. The location estimation section 368 may also output the information indicating a positioning precision.

In the present embodiment, the sensor unit 370 includes various types of sensors. The sensor unit 370 may include various types of internal sensors. The sensor unit 370 may include various types of external sensors. The sensor unit 370 may transmit the output from various types of sensors to the control unit 380. Examples of the sensor include a millimeter wave sensor, a proximity detection sensor, a contact detection sensor, an acceleration sensor, a gyro sensor, a wheel speed sensor, a rotary encoder, a load sensor, an idling detection sensor, a magnetic sensor, a geomagnetic sensor (also referred to as orientation sensor, electronic compass, and the like), a soil moisture sensor, and the like.

In the present embodiment, the control unit 380 controls the lawn mower 210. More specifically, the control unit 380 controls the operation of the lawn mower 210. Examples of the operation of the lawn mower 210 include an operation related to a movement of the lawn mower 210, an operation related to a work of the lawn mower 210, and the like.

According to one embodiment, the control unit 380 controls a pair of the travel motor 316 to control a movement of the lawn mower 210. According to another embodiment, the control unit 380 controls the work unit 320 to control a work of the lawn mower 210.

The control unit 380 may control an operation of the lawn mower 210 based on the output from at least one of the GPS reception section 366 and the location estimation section 368. The control unit 380 may control the operation of the lawn mower 210 based on the instruction from the management server 230. For example, the control unit 380 controls the lawn mower 210 based on the information indicating a work schedule generated by the management server 230. The control unit 380 may control the lawn mower 210 according to the instruction generated by the management server 230. Examples of the above-described instruction include the return information, the control signal and the like which are described with reference to Fig. 1. The control unit 380 will be described in detail later.

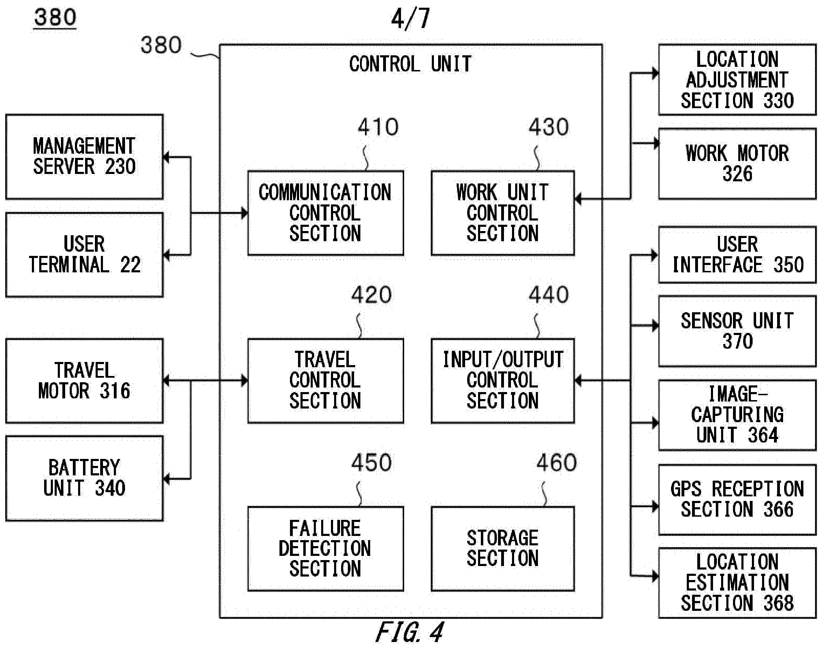

Fig. 4 schematically shows one example of an internal configuration of the control unit 380. In the present embodiment, the control unit 380 includes the communication control section 410, the travel control section 420, the work unit control section 430, the input/output control section 440, the failure detection section 450, and the storage section 460. Each portion in the control unit 380 may transmit and receive information with each other.

The communication control section 410 may be one example of the return information obtaining section and the control signal obtaining section. The travel control section 420 may be one example of the control apparatus and the control section. The storage section 460 may be one example of the historical information storage section.

The communication control section 410 may include a configuration similar to that of at least one of the return information obtaining section 182 and the control signal obtaining section 184 as long as there is no technical contradiction. Similarly, at least one of the return information obtaining section 182 and the control signal obtaining section 184 may have a configuration similar to the communication control section 410 as long as there is no technical contradiction.

The travel control section 420 may have a configuration similar to at least one of the control apparatus 180 and the control section 188 as long as there is no technical contradiction. Similarly, at least one of the control apparatus 180 and the control section 188 may have a configuration similar to that of the travel control section 420 as long as there is no technical contradiction. It is noted that the work unit control section 430 may have a configuration similar to at least one of the control apparatus 180 and the control section 188 with respect to controlling the work of the moving object 150.

The failure detection section 450 may have a configuration similar to the failure detection section 186 as long as there is no technical contradiction. Similarly, the failure detection section 186 may have a configuration similar to the failure detection section 450 as long as there is no technical contradiction.

The storage section 460 may have a configuration similar to the historical information storage section 192 as long as there is no technical contradiction. Similarly, the historical information storage section 192 may have a configuration similar to the storage section 460 as long as there is no technical contradiction.

In the present embodiment, the communication control section 410 controls communication with the equipment located outside the lawn mower 210. The communication control section 410 may be a communication interface compatible with one or more communication scheme. Examples of the external equipment include the user terminal 22, the management server 230, and the like.

For example, the communication control section 410 obtains at least one of the return information and the control signal from the management server 230. The communication control section 410 may output at least one of the obtained return information and the control signal to, for example, the travel control section 420.

In the present embodiment, the travel control section 420 controls the travel motor 316 to control movement of the lawn mower 210. The travel control section 420 controls the autonomous travel of the lawn mower 210. For example, the travel control section 420 controls at least one of the advancing speed, the advancing direction, the move mode, and the travel path of the lawn mower 210. The travel control section 420 may perform at least one of a control of straight moving, a control of rotation, and a control of circling of the lawn mower 210 by utilizing data output from the sensor unit 370. The travel control section 420 may monitor the current value of the travel motor 316. The travel control section 420 will be described in detail later.

In the present embodiment, the work unit control section 430 controls the work unit 320. In the present embodiment, the work unit control section 430 may control the work unit 320 based on the control signal from the management server 230. The work unit control section 430 may control at least one of a work mode, a type of work, work intensity, and timing when the work is performed of the work unit 320. For example, the work unit control section 430 controls the work motor 326 and controls work intensity of the work unit 320. The work unit control section 430 may control the location adjustment section 330 to control work intensity of the work unit 320. The work unit control section 430 may monitor the current value of the work motor 326.

In the present embodiment, the input/output control section 440 accepts input from at least one of the user interface 350, the image-capturing unit 364, the GPS reception section 366, the location estimation section 368, and the sensor unit 370. The input/output control section 440 may control at least one of the user interface 350, the image-capturing unit 364, the GPS reception section 366, the location estimation section 368, and the sensor unit 370.

The input/output control section 440 outputs information to the user interface 350. The input/output control section 440 may output information to at least one of the user terminal 22 and the management server 230 via the communication control section 410. For example, the input/output control section 440 outputs the information indicating a state of the lawn mower 210 to at least one of the user terminal 22 and the management server 230 if the estimation precision of the self-location of the lawn mower 210 does not satisfy a predetermined condition, or if any failures occur in the lawn mower 210.

In the present embodiment, the failure detection section 450 detects a failure which occurs in at least a part of the management system 200. If a failure of the lawn mower 210 is detected, the failure detection section 450 transmits, to the control unit 380, the information indicating that the failure has been detected. In this case, the failure detection section 450 may transmits, to the management server 230, the information indicating that a failure of the lawn mower 210 has been detected.

In one embodiment, the failure detection section 450 detects that a failure has occurred in the GPS reception section 366. In another embodiment, the failure detection section 450 detects that a failure has occurred in at least one of the management server 230, a component which transmits a control signal to the management server 230, and the communication control section 410. Various types of failures may be detected using a procedure similar to that of the failure detection section 186.

In the present embodiment, the storage section 460 stores various types of information. The storage section 460 may store various types of information which is utilized by the travel control section 420 to generate a parameter related to the movement of the lawn mower 210. Examples of the parameter related to movement include an advancing direction, an advancing speed, a travel mode, and the like.

The storage section 460 may store various types of information related to a history of the lawn mower 210. In one embodiment, the storage section 460 stores information related to the moving history of the lawn mower 210. In another embodiment, the storage section 460 stores information related to the work history of the lawn mower 210.

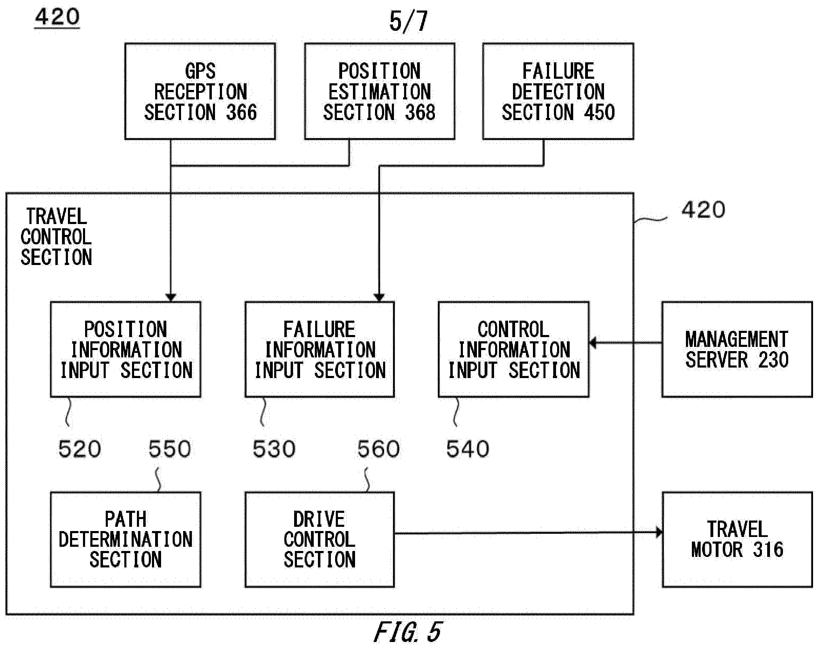

Fig. 5 schematically shows one example of the internal configuration of the travel control section 420. In the present embodiment, the travel control section 420 includes the location information input section 520, the failure information input section 530, the control information input section 540, the path determination section 550, and the drive control section 560. Each portion in the travel control section 420 may transmit and receive information with each other.

The control information input section 540 may be one example of the return information obtaining section and the control signal obtaining section. The path determination section 550 may be one example of the path plan section. The drive control section 560 may be one example of the control section.

The control information input section 540 may include a configuration similar to that of at least one of the return information obtaining section 182 and the control signal obtaining section 184 as long as there is no technical contradiction. Similarly, at least one of the return information obtaining section 182 and the control signal obtaining section 184 may have a configuration similar to that of the control information input section 540 as long as there is no technical contradiction.

The path determination section 550 may have a configuration similar to that of the path plan section 194 as long as there is no technical contradiction. Similar, the path plan section 194 may have a configuration similar to the path determination section 550 as long as there is no technical contradiction.

The drive control section 560 may have a configuration similar to that of the control section 188 as long as there is no technical contradiction. Similar, the control section 188 may have a configuration similar to that of the control section 188 as long as there is no technical contradiction.

In the present embodiment, the information indicating the location of the lawn mower 210 is input to the location information input section 520. In one embodiment, the location information input section 520 obtains the information indicating the location of the lawn mower 210 positioned by the GPS reception section 366. The location information input section 520 may obtain the information indicating a positioning precision. In another embodiment, the location information input section 520 obtains the information indicating the location of the lawn mower 210 estimated by the location estimation section 368. The location information input section 520 may obtain the information indicating the estimation precision of the location. The location information input section 520 may output the input information to the drive control section 560.

In the present embodiment, the information related to a failure of each portion in the management system 200 is input to the failure information input section 530. For example, the failure information input section 530 obtains information indicating that the failure detection section 450 has detected the failure. The failure information input section 530 may obtain the information indicating a part in which the failure occurs. The failure information input section 530 may obtain the information indicating the content of the failure. The failure information input section 530 may output the input information to the drive control section 560.

In the present embodiment, various types of information which control the lawn mower 210 are input to the control information input section 540. For example, the control information input section 540 obtains at least one of the return information and the control signal from the management server 230. The control information input section 540 may output the input information to the drive control section 560.

In the present embodiment, the path determination section 550 determines the moving path of the lawn mower 210. The path determination section 550 may obtain the information indicating the remaining level of the battery unit 340. The path determination section 550 may determine the moving path of the lawn mower 210 based on the remaining level of the battery unit 340. The path determination section 550 may output the information indicating the determined moving path of the lawn mower 210 to the drive control section 560.

In one embodiment, the path determination section 550 may plan the moving path of the lawn mower 210 such that the lawn mower 210 exists in the vicinity of the charging station 208 when the remaining level of the battery unit 340 is low. (i) If it is determined that the remaining level of the battery unit 340 satisfies the predetermined condition, the path determination section 550 may plan the moving path depending on the remaining level, and (ii) the path determination section 550 may plan at least a part of the moving path in a case where the remaining level of the battery unit 340 satisfies the predetermined condition before it is determined that the remaining level of the battery unit 340 satisfies the predetermined condition. The path determination section 550 may plan the moving path based on the predetermined policy. The above-described policy may include a configuration similar to the policy described with reference to Fig. 1.

In another embodiment, the path determination section 550 may plan the return path along which the lawn mower 210 returns to the charging station 208 if the remaining level of the battery unit 340 satisfies a predetermined first condition. The path determination section 550 may plan a return path such that the overlap between (i) the return path and (ii) a point or region which the lawn mower 210 passed until the remaining level of the battery unit 340 satisfies the predetermined first condition after the lawn mower 210 returns to the charging station 208 last time (that is, the point or region which the lawn mower 210 passed until the remaining level of the battery unit 340 satisfies the predetermined first condition after the lawn mower 210 starts from the charging station 208 this time). Examples of the first condition include (i) a condition that the remaining level of the battery unit 340 is lower than the first threshold, (ii) a condition that the changing amount or the changing speed of the remaining level of the battery unit 340 exceeds the second threshold, (iii) a combination thereof, and the like.

The path determination section 550 may plan the return path using a procedure similar to a method to plan the return path described with reference to Fig. 1. The path determination section 550 may further plan the return path such that an region to be the work target of the lawn mower 210 is included on the way of the return path. The path determination section 550 may determine the location and range of the above-described region and may select the subarea to be the work target among a plurality of the subareas 206 included in the working region 204.

For example, the path determination section 550 extracts one or more subareas 206 in which the lawn mower 210 can perform a work, with reference to, for example, the work schedule stored in the storage section 460. The path determination section 550 may plan the return path such that at least one subareas 206 among the one or more extracted subareas 206 are incorporated in a part of the return path. The path determination section 550 may predict a power consumption by the work which is performed, and determine the subarea 206 incorporated in the return path based on the prediction.

Thereby, the lawn mower 210 can perform a work in one or more subareas 206 while returning to the charging station 208. The path determination section 550 may determine at least one of the travel mode and the work mode in the subarea 206 incorporated on the way of the return path.

If the lawn mower 210 performs the work in the region set on the return path to the charging station 208, there is a chance that an actual value of the power consumption by the lawn mower 210 exceeds the prediction value of the path determination section 550. Therefore, if the lawn mower 210 exists in one of one or more regions to be the work target arranged on the way of the return path, the path determination section 550 determines whether or not the remaining level of the battery unit 340 satisfies the predetermined second condition. If the remaining level of the battery unit 340 satisfies the predetermined second condition, the path determination section 550 may update the return path. The path determination section 550 may plan the return path after the update based on the current location of the lawn mower 210 and the current remaining level of the battery unit 340.

Examples of the second condition include (i) a condition that the remaining level of the battery unit 340 is lower than the third threshold, (ii) a condition that the changing amount or the changing speed of the remaining level of the battery unit 340 exceeds the fourth threshold, (iii) a combination thereof, and the like. The third threshold may be (i) a predetermined value and (ii) a value determined based on the current location of the lawn mower 210 and the current remaining level of the battery unit 340. The third threshold may be a value larger than 0 and smaller than the first threshold. The fourth threshold may be (i) a predetermined value and (ii) a value determined based on the current location of the lawn mower 210 and the current remaining level of the battery unit 340.

In the present embodiment, the drive control section 560 controls the travel motor 316. The drive control section 560 may control each of the one or more travel motor 316. The drive control section 560 determines each controlling amount of the one or more travel motors 316 based on, for example, at least one of (i) the location of the lawn mower 210 positioned by the GPS reception section 366, (ii) the location of the lawn mower 210 estimated by the location estimation section 368, and (iii) the control signal obtained by the communication control section 410.

In one embodiment, the failure detection section 450 may detect that a failure has occurred in the GPS reception section 366. Therefore, according to the present embodiment, (i) if the failure detection section 450 has not detected a failure of the GPS reception section 366, the drive control section 560 controls the travel motor 316 based on the location of the lawn mower 210 positioned by the GPS reception section 366. On the other hand, (ii) if the failure detection section 450 detects a failure of the GPS reception section 366, the drive control section 560 controls the travel motor 316 based on the location of the lawn mower 210 estimated by the location estimation section 368 and the return information obtained by the control information input section 540.

In another embodiment, the failure detection section 450 may detect that a failure has occurred in the GPS reception section 366. Therefore, according to the present embodiment, (i) if the failure detection section 450 has not detected a failure of the GPS reception section 366, the drive control section 560 controls the travel motor 316 based on the location of the lawn mower 210 positioned by the GPS reception section 366. On the other hand, (ii) if the failure detection section 450 has detected a failure of the GPS reception section 366, the drive control section 560 controls the travel motor 316 based on the control signal obtained by the control information input section 540.

In yet another embodiment, the failure detection section 450 may detect that a failure has occurred in at least one of the management server 230, a component which transmits a control signal to the management server 230, and the communication control section 410. Therefore, according to the present embodiment, (i) if the failure detection section 450 has not detected a failure, the failure detection section 450 controls the travel motor 316 based on the control signal obtained by the control information input section 540. On the other hand, (ii) if the failure detection section 450 detects a failure, the drive control section 560 controls the travel motor 316 based on the location of the lawn mower 210 estimated by the location estimation section 368 and the return information obtained by the control information input section 540.

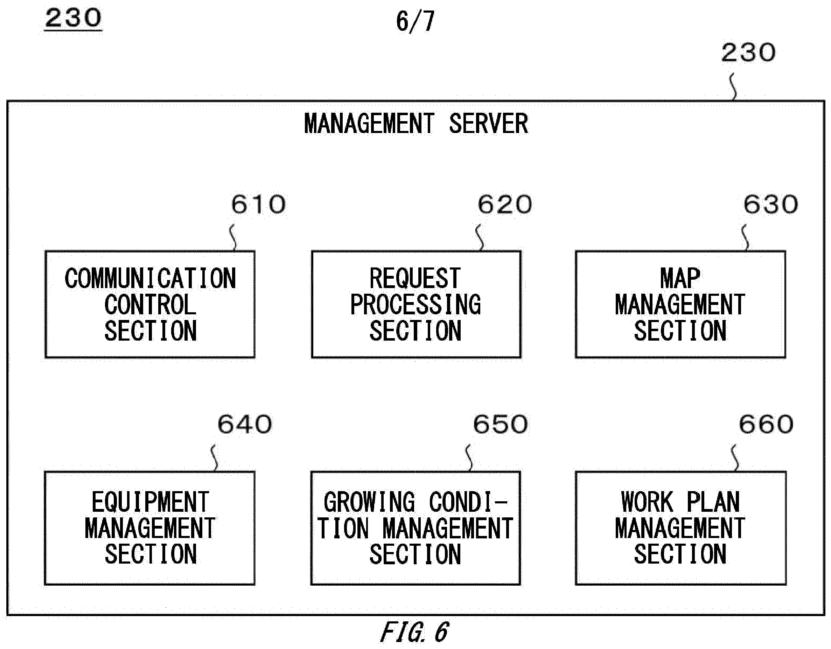

Fig. 6 schematically shows one example of the internal configuration of the management server 230. In the present embodiment, the management server 230 includes the communication control section 610, the request processing section 620, the map management section 630, the equipment management section 640, the growing condition management section 650, and the work plan management section 660.

In the present embodiment, the communication control section 610 controls communication with the equipment outside the management server 230. The communication control section 610 may be a communication interface compatible with one or more communication scheme. Examples of the external equipment include the user terminal 22, the lawn mower 210, and the like. In the present embodiment, the request processing section 620 accepts the request from the external equipment. The request processing section 620 processes the request from the external equipment.

In the present embodiment, the map management section 630 manages the map information. For example, the map management section 630 performs the process such as generating, updating, deleting, and searching of the map information. In one embodiment, the map management section 630 manages the map information of all subareas included in the working region 204. In another embodiment, for a subarea which is a part of the subareas included in the working region 204, the map management section 630 manages the map information of the subarea.

For example, in response to a request from the lawn mower 210, the map management section 630 may extract the map information matching the request, and may transmit the extracted map information to the lawn mower 210. For example, in response to a request from the lawn mower 210, the map management section 630 transmits the map information around the current location of the lawn mower 210 to the lawn mower 210.

In the present embodiment, the equipment management section 640 manages various types of equipment which configure the management system 200. For example, the equipment management section 640 controls the lawn mower 210. The equipment management section 640 may manage the information related to the various types of equipment related to the management system 200. For example, the equipment management section 640 obtains the information related to the state of the lawn mower 210 from the lawn mower 210. The equipment management section 640 may manage the information related to the user terminal 22. The equipment management section 640 will be described in detail later.

In the present embodiment, the growing condition management section 650 manages the information related to the growing condition of the plant. The growing condition management section 650 may manage the information related to the growing condition of the plant in each of a plurality of subareas included in the working region 204. The growing condition management section 650 may manage the information related to the growing condition of the plant in at least one of a plurality of subareas included in the working region 204. Examples of the growing condition of the plant include a growing stage of the plant, a growing status of the plant, and the like. Examples of the information indicating the growing status of the plant include a color of the plant, a thickness of the plant, a density of the plant, and the like. It is expected that the load on the work unit 320 increases as the plant grows. Therefore, the information indicating the growing status of the plant may be the information indicating the load of the work unit 320. Examples of the load of the work unit 320 include the load of the work motor 326, the wearing condition of the cutter blade 324, and the like.

The growing condition management section 650 may manage the information related to the growing environment of the plant. Examples of the growing environment of the plant include the information related to the soil in the subarea where the plant is arranged, and the like.

In the present embodiment, the work plan management section 660 manages the schedule of the work performed by the lawn mower 210 (also referred to as work schedule). For each of a plurality of subareas included in the working region 204, the work plan management section 660 may plan a schedule of the work performed in the subarea. The work plan management section 660 may plan the work schedule of the lawn mower 210. The work plan management section 660 may manage the progress of the work schedule of the lawn mower 210.

The work schedule may be the information which associates (i) the identification information indicating each of a plurality of subareas, (ii) a timing when the work related to the growing of the plant in the subarea is performed, and (iii) at least one of the type and the intensity of the work in the subarea. The type of work may be at least one of sowing, pruning, lawn mowing, grass cutting, watering, fertilizing, soiling, weeding, and the like.

The work plan management section 660 may obtain, from the lawn mower 210, the information indicating the progress status of the work in each point or region through which the lawn mower 210 passed. Examples of the information indicating the progress status of the work include the information indicating the load of the work unit 320, the information indicating the analysis result of the image captured by the image-capturing unit 364, the information indicating the analysis result of the output from the sensor unit 370, and the like. The work plan management section 660 may update the work schedule based on the information obtained by the growing condition management section 650.

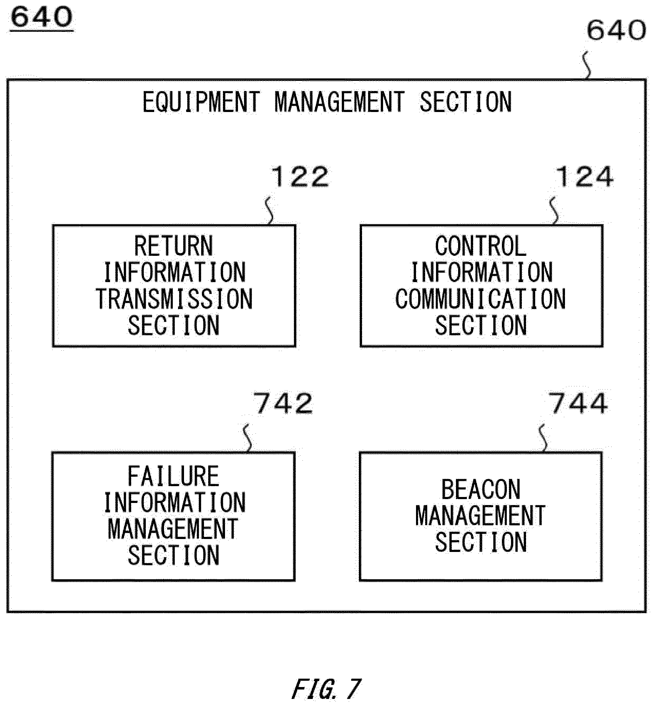

Fig. 7 schematically shows one example of the internal configuration of the equipment management section 640. In the present embodiment, the equipment management section 640 includes the return information transmission section 122, the control signal communication section 124, the failure information management section 742, and the beacon management section 744. The failure information management section 742 may be one example of the failure information obtaining section. The beacon management section 744 may be one example of the instruction output section. In the present embodiment, each of the return information transmission section 122 and the control signal communication section 124 may have a configuration similar to that of the return information transmission section 122 and the control signal communication section 124 described with reference to Fig. 1, except that the information is transmitted to the lawn mower 210.

In the present embodiment, the failure information management section 742 obtains the failure information indicating that a failure has occurred in at least one of the lawn mower 210 and the management server 230. In one embodiment, the failure information management section 742 obtains a signal indicating that a failure has occurred from each portion of the management server 230. In this case, the failure information management section 742 may transmit the information indicating that a failure has occurred in the management server 230 to the lawn mower 210. In another embodiment, the failure information management section 742 receives the information indicating that a failure has occurred in the lawn mower 210 from the lawn mower 210.

In the present embodiment, the beacon management section 744 controls the transmitter which transmits a beacon signal. The beacon management section 744 may control the transmission and the stop of the beacon signal. The beacon signal may be a signal to notify the lawn mower 210 of the location of the charging station 208. The beacon signal may be a signal to guide the lawn mower 210 to the charging station 208. The transmitter of the beacon signal may be arranged in the vicinity of the charging station 208 or the charging station 208.

In the present embodiment, the beacon management section 744 outputs an instruction to generate a beacon signal to indicate a return destination for the lawn mower 210 if a failure indicated by the failure information obtained by the failure information management section 742 satisfies a predetermined condition. Examples of the predetermined condition include a condition that a failure has occurred in the management server 230, a condition that a failure has occurred in the return information transmission section 122, a condition that a failure has occurred in the control signal communication section 124, a condition that a failure has occurred in the communication control section 410, and the like.

While the embodiments of the present invention have been described, the technical scope of the invention is not limited to the above described embodiments. It is apparent to persons skilled in the art that various alterations and improvements can be added to the above-described embodiments. Also, matters explained with reference to a particular embodiment can be applied to other embodiments as long as such application does not cause a technical contradiction. For example, what is described for an embodiment of the Fig. 1 can be applied to another embodiment described with reference to another drawing. It is also apparent from the scope of the claims that the embodiments added with such alterations or improvements can be included in the technical scope of the invention.

The operations, procedures, steps, and stages of each process performed by an equipment, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

20 communication network, 22 user terminal, 100 management system, 102 region, 108 return destination, 120 management apparatus, 122 return information transmission section, 124 control signal communication section, 150 moving object, 152 communication section, 154 drive section, 156 electric storage section, 166 positioning section, 168 self-location estimation section, 180 control apparatus, 182 return information obtaining section, 184 control signal obtaining section, 186 failure detection section, 188 control section, 192 historical information storage section, 194 path plan section, 200 management system, 202 premises, 204 working region, 206 subarea, 208 charging station, 210 lawn mower, 230 management server, 302 enclosure, 312 front wheel, 314 rear wheel, 316 travel motor, 320 work unit, 322 blade disk, 324 cutter blade, 326 work motor, 328 shaft, 330 location adjustment section, 340 battery unit, 350 user interface, 364 image-capturing unit, 366 GPS reception section, 368 location estimation section, 370 sensor unit, 380 control unit, 410 communication control section, 420 travel control section, 430 work unit control section, 440 input/output control section, 450 failure detection section, 460 storage section, 520 location information input section, 530 failure information input section, 540 control information input section, 550 path determination section, 560 drive control section, 610 communication control section, 620 request processing section, 630 map management section, 640 equipment management section, 650 growing condition management section, 660 work plan management section, 742 failure information management section, 744 beacon management section

## Claims

1. A management apparatus (120, 230) to manage a moving object (150, 210) having an autonomous movement function, comprising:
a return information transmission section (122) to transmit, to the moving object (150, 210) at a predetermined time or at a predetermined time interval, a return information for the moving object to return from a current location of the moving object to a return destination of the moving object,
**characterized in that** the return information includes
an estimation parameter used for a self-location estimation processing which calculates a relative locational relationship between a particular reference location and the moving object (150, 210) based on a controlling amount of a drive section (154, 316, 326) of the moving object and estimates a location of the moving object based on the relative locational relationship,
wherein
the moving object (150, 210) includes a self-location estimation section (168, 368) to calculate a relative locational relationship between a particular reference location and the moving object (150, 210) based on a controlling amount of a drive section (154, 316, 326) of the moving object and to estimate a location of the moving object based on the relative locational relationship, and
the self-location estimation section (168, 368) is further configured to utilize the return destination as the reference location.

2. The management apparatus (120, 230) according to claim 1, wherein
the estimation parameter is a parameter indicating a relationship between a controlling amount of the drive section of the moving object (150, 210) and at least one of a moving distance and a moving direction of the moving object.

3. The management apparatus (120, 230) according to claim 1 or 2, further comprising a control signal communication section (124) to transmit a control signal to control the moving object (150, 210).

4. The management apparatus (120, 230) according to any one of claims 1 to claim 3, further comprising:
a failure information obtaining section (742) to obtain a failure information indicating that a failure has occurred in the moving object (150, 210) or the management apparatus (120, 230); and
an instruction output section (744) to output an instruction to generate a beacon signal indicating a return destination of the moving object (150, 210) if a failure indicated by the failure information obtained by the failure information obtaining section satisfies a predetermined condition.

5. The management apparatus (120, 230) according to any one of claims 1 to claim 4, wherein
the estimation parameter includes at least one of (i) a parameter indicating a relationship between an output from a wheel speed sensor or a rotary encoder mounted on the moving object (150, 210) and a moving distance of the moving object (150, 210) and (ii) a parameter indicating a relationship between an output from a gyro sensor or an acceleration sensor mounted on the moving object (150, 210) and a moving direction of the moving object (150, 210).

6. A computer program comprising instructions to cause the management apparatus (120, 230) according to any one of claims 1 to 5 to perform each function of the management apparatus (120, 230) as in the corresponding claims.

7. A management system (100, 200), comprising the management apparatus (120, 230) according to any one of claim 1 to claim 5 and the moving object (150, 210), wherein
the moving object (150, 210) includes:
a positioning section (166, 366) to position a location of the moving object (150, 210);
a self-location estimation section (168, 368) to calculate a relative locational relationship between a particular reference location and the moving object (150, 210) based on a controlling amount of a drive section (154, 316, 326) of the moving object and estimates a location of the moving object based on the relative locational relationship;
a return information obtaining section (182, 410, 540) to obtain the return information transmitted by the management apparatus;
a failure detection section (186, 450) to detect that a failure has occurred in the positioning section; and
a control section (188, 420) to control the drive section (154, 316, 326), wherein
a nominal precision of the positioning section (166, 366) is higher than a nominal precision of the self-location estimation section (168, 368), and
the control section (188, 420) (i) controls the drive section (154, 316, 326) based on a location of the moving object (150, 210) positioned by the positioning section (166, 366) if the failure detection section (186, 450) has not detected a failure of the positioning section (166, 366), and(ii) controls the drive section (154, 316, 326) based on a location of the moving object estimated by the self-location estimation section (168, 368) and the return information obtained by the return information obtaining section (182, 410, 540) if the failure detection section (186, 450) has detected a failure of the positioning section (166, 366).

8. A management system (100, 200), comprising:
the management apparatus (120, 230) according to any one of claim 1 to claim 5; and
the moving object (150, 210), wherein
the management apparatus (120, 230) further includes a control signal communication section (124) to transmit a control signal to control the moving object (150, 210),
the moving object (150, 210) includes:
a self-location estimation section (168, 368) to calculate a relative locational relationship between a particular reference location and the moving object (150, 210) based on a controlling amount of a drive section (154, 316, 326) of the moving object and estimates a location of the moving object based on the relative locational relationship;
a control signal obtaining section (184, 410, 540) to obtain the control signal transmitted by the management apparatus;
a return information obtaining section (182, 410, 540) to obtain the return information transmitted by the management apparatus;
a failure detection section (186, 450) to detect that a failure has occurred in at least one of the management apparatus (120, 230), the control signal communication section (124), and the control signal obtaining section (184, 410, 540); and
a control section (188, 420) to control the drive section, wherein
the control section (i) controls the drive section (154, 316, 326) based on the control signal obtained by the control signal obtaining section (184, 410, 540) if the failure detection section (186, 450) has not detected the failure, and (ii) controls the drive section (154, 316, 326) based on a location of the moving object (150, 210) estimated by the self-location estimation section (168, 368) and the return information obtained by the return information obtaining section (182, 410, 540) if the failure detection section (186, 450) has detected the failure.

## Patentansprüche

1. Verwaltungsvorrichtung (120, 230) zum Verwalten eines sich bewegenden Objekts (150, 210), welches eine Funktion einer autonomen Bewegung aufweist, umfassend:
einen Rückkehrinformationsübertragungsabschnitt (122), um an das sich bewegende Objekt (150, 210) zu einer vorbestimmten Zeit oder zu einem vorbestimmten Zeitintervall eine Rückkehrinformation für das sich bewegende Objekt zu übertragen, um von einer aktuellen Position des sich bewegenden Objekts zu einem Rückkehrziel des sich bewegenden Objekts zurückzukehren,
**dadurch gekennzeichnet, dass** die Rückkehrinformation umfasst:
einen Schätzungsparameter, welcher für eine Eigene-Position-Schätzungsverarbeitung verwendet wird, welche auf Grundlage einer Steuermenge eines Antriebsabschnitts (154, 316, 326) des sich bewegenden Objekts eine relative Positionsbeziehung zwischen einer bestimmten Referenzposition und dem sich bewegenden Objekt (150, 210) berechnet und auf Grundlage der relativen Positionsbeziehung eine Position des sich bewegenden Objekts schätzt,
wobei
das sich bewegende Objekt (150, 210) einen Eigene-Position-Schätzungsabschnitt (168, 368) umfasst, um auf Grundlage einer Steuermenge eines Antriebsabschnitts (154, 316, 326) des sich bewegenden Objekts eine relative Positionsbeziehung zwischen einer bestimmten Referenzposition und dem sich bewegenden Objekt (150, 210) zu berechnen und um auf Grundlage der relativen Positionsbeziehung eine Position des sich bewegenden Objekts zu schätzen, und
der Eigene-Position-Schätzungsabschnitt (168, 368) ferner dazu eingerichtet ist, das Rückkehrziel als die Referenzposition zu nutzen.

2. Verwaltungsvorrichtung (120, 230) nach Anspruch 1, wobei
der Schätzungsparameter ein Parameter ist, welcher eine Beziehung zwischen einer Steuermenge des Antriebsabschnitts des sich bewegenden Objekts (150, 210) und wenigstens einem aus einer Bewegungsstrecke und einer Bewegungsrichtung des sich bewegenden Objekts angibt.

3. Verwaltungsvorrichtung (120, 230) nach Anspruch 1 oder 2, ferner umfassend einen Steuersignalkommunikationsabschnitt (124), um ein Steuersignal zu übertragen, um das sich bewegende Objekt (150, 210) zu steuern.

4. Verwaltungsvorrichtung (120, 230) nach einem der Ansprüche 1 bis 3, ferner umfassend:
einen Fehlerinformationserhaltungsabschnitt (742), um eine Fehlerinformation zu erhalten, welche angibt, dass ein Fehler in dem sich bewegenden Objekt (150, 210) oder der Verwaltungsvorrichtung (120, 230) aufgetreten ist; und
einen Anweisungsausgabeabschnitt (744), um eine Anweisung auszugeben, um ein Beacon-Signal zu generieren, welches ein Rückkehrziel des sich bewegenden Objekts (150, 210) angibt, wenn ein durch die durch den Fehlerinformationserhaltungsabschnitt erhaltene Fehlerinformation angegebener Fehler eine vorbestimmte Bedingung erfüllt.

5. Verwaltungsvorrichtung (120, 230) nach einem der Ansprüche 1 bis 4, wobei
der Schätzungsparameter wenigstens eines umfasst aus (i) einem Parameter, welcher eine Beziehung zwischen einem Ausgang von einem an dem sich bewegenden Objekt (150, 210) montierten Raddrehzahlsensor oder einem an dem sich bewegenden Objekt (150, 210) montierten Drehgeber und einer Bewegungsstrecke des sich bewegenden Objekts (150, 210) angibt, und (ii) einem Parameter, welcher eine Beziehung zwischen einem Ausgang von einem an dem sich bewegenden Objekt (150, 210) montierten Gyro-Sensor oder einem an dem sich bewegenden Objekt (150, 210) montierten Beschleunigungssensor und einer Bewegungsrichtung des sich bewegenden Objekts (150, 210) angibt.

6. Computerprogramm, umfassend Anweisungen zum Veranlassen, dass die Verwaltungsvorrichtung (120, 230) nach einem der Ansprüche 1 bis 5 jede Funktion der Verwaltungsvorrichtung (120, 230) wie in den entsprechenden Ansprüchen durchführt.

7. Verwaltungssystem (100, 200), umfassend die Verwaltungsvorrichtung (120, 230) nach einem der Ansprüche 1 bis 5 und das sich bewegende Objekt (150, 210), wobei
das sich bewegende Objekt (150, 210) umfasst:
einen Positionierungsabschnitt (166, 366), um eine Position des sich bewegenden Objekts (150, 210) zu positionieren;
einen Eigene Position-Schätzungsabschnitt (168, 368), um auf Grundlage einer Steuermenge eines Antriebsabschnitts (154, 316, 326) des sich bewegenden Objekts eine relative Positionsbeziehung zwischen einer bestimmten Referenzposition und dem sich bewegenden Objekt (150, 210) zu berechnen und um auf Grundlage der relativen Positionsbeziehung eine Position des sich bewegenden Objekts zu schätzen;
einen Rückkehrinformationserhaltungsabschnitt (182, 410, 540), um die durch die Verwaltungsvorrichtung übertragene Rückkehrinformation zu erhalten;
einen Fehlerdetektionsabschnitt (186, 450), um zu detektieren, dass ein Fehler in dem Positionierungsabschnitt aufgetreten ist; und
einen Steuerabschnitt (188, 420), um den Antriebsabschnitt (154, 316, 326) zu steuern, wobei
eine nominale Präzision des Positionierungsabschnitts (166, 366) höher ist als eine nominale Präzision des Eigene Position-Schätzungsabschnitts (168, 368) und
der Steuerabschnitt (188, 420) (i) den Antriebsabschnitt (154, 316, 326) auf Grundlage einer durch den Positionierungsabschnitt (166, 366) positionierten Position des sich bewegenden Objekts (150, 210) steuert, wenn der Fehlerdetektionsabschnitt (186, 450) keinen Fehler des Positionierungsabschnitts (166, 366) detektiert hat, und (ii) den Antriebsabschnitt (154, 316, 326) auf Grundlage einer durch den Eigene Position-Schätzungsabschnitt (168, 368) geschätzten Position des sich bewegenden Objekts und der durch den Rückkehrinformationserhaltungsabschnitt (182, 410, 540) erhaltenen Rückkehrinformation steuert, wenn der Fehlerdetektionsabschnitt (186, 450) einen Fehler des Positionierungsabschnitts (166, 366) detektiert hat.

8. Verwaltungssystem (100, 200), umfassend:
die Verwaltungsvorrichtung (120, 230) nach einem der Ansprühe 1 bis 5; und
das sich bewegende Objekt (150, 210), wobei
die Verwaltungsvorrichtung (120, 230) ferner einen Steuersignalkommunikationsabschnitt (124) umfasst, um ein Steuersignal zu übertragen, um das sich bewegende Objekt (150, 210) zu steuern,
wobei das sich bewegende Objekt (150, 210) umfasst:
einen Eigene Position-Schätzungsabschnitt (168, 368), um auf Grundlage einer Steuermenge eines Antriebsabschnitts (154, 316, 326) des sich bewegenden Objekts eine relative Positionsbeziehung zwischen einer bestimmten Referenzposition und dem sich bewegenden Objekt (150, 210) zu berechnen und um auf Grundlage der relativen Positionsbeziehung eine Position des sich bewegenden Objekts zu schätzen;
einen Steuersignalerhaltungsabschnitt (184, 410, 540), um das durch die Verwaltungsvorrichtung übertragene Steuersignal zu erhalten;
einen Rückkehrinformationserhaltungsabschnitt (182, 410, 540), um die durch die Verwaltungsvorrichtung übertragene Rückkehrinformation zu erhalten;
einen Fehlerdetektionsabschnitt (186, 450), um zu detektieren, dass ein Fehler in wenigstens einem aus der Verwaltungsvorrichtung (120, 230), dem Steuersignalkommunikationsabschnitt (124) und dem Steuersignalerhaltungsabschnitt (184, 410, 540) aufgetreten ist; und
einen Steuerabschnitt (188, 420), um den Antriebsabschnitt zu steuern, wobei
der Steuerabschnitt (i) den Antriebsabschnitt (154, 316, 326) auf Grundlage des durch den Steuersignalerhaltungsabschnitt (184, 410, 540) erhaltenen Steuersignals steuert, wenn der Fehlerdetektionsabschnitt (186, 450) den Fehler nicht detektiert hat, und (ii) den Antriebsabschnitt (154, 316, 326) auf Grundlage einer durch den Eigene Position-Schätzungsabschnitt (168, 368) geschätzten Position des sich bewegenden Objekts (150, 210) und der durch den Rückkehrinformationserhaltungsabschnitt (182, 410, 540) erhaltenen Rückkehrinformation steuert, wenn der Fehlerdetektionsabschnitt (186, 450) den Fehler detektiert hat.

## Revendications

1. Appareil de gestion (120, 230) pour gérer un objet mobile (150, 210) ayant une fonction de mouvement autonome, comprenant :
une section de transmission d'informations de retour (122) pour transmettre, à l'objet mobile (150, 210) à un moment prédéterminé ou à un intervalle de temps prédéterminé, des informations de retour pour que l'objet mobile revienne d'une localisation actuelle de l'objet mobile à une destination de retour de l'objet mobile,
**caractérisé en ce que** les informations de retour comportent
un paramètre d'estimation utilisé pour un traitement d'estimation d'auto-localisation qui calcule une relation de localisation relative entre une localisation de référence particulière et l'objet mobile (150, 210) sur la base d'une quantité de commande d'une section d'entraînement (154, 316, 326) de l'objet mobile et estime une localisation de l'objet mobile sur la base de la relation de localisation relative,
dans lequel
l'objet mobile (150, 210) comporte une section d'estimation d'auto-localisation (168, 368) pour calculer une relation de localisation relative entre une localisation de référence particulière et l'objet mobile (150, 210) sur la base d'une quantité de commande d'une section d'entraînement (154, 316, 326) de l'objet mobile et pour estimer une localisation de l'objet mobile sur la base de la relation de localisation relative, et
la section d'estimation d'auto-localisation (168, 368) est en outre configurée pour utiliser la destination de retour comme étant la localisation de référence.

2. Appareil de gestion (120, 230) selon la revendication 1, dans lequel
le paramètre d'estimation est un paramètre indiquant une relation entre une quantité de commande de la section d'entraînement de l'objet mobile (150, 210) et au moins l'une d'une distance de mouvement et d'une direction de mouvement de l'objet mobile.

3. Appareil de gestion (120, 230) selon la revendication 1 ou 2, comprenant en outre une section de communication de signal de commande (124) pour transmettre un signal de commande pour commander l'objet mobile (150, 210).

4. Appareil de gestion (120, 230) selon l'une quelconque des revendications 1 à 3, comprenant en outre :
une section d'obtention d'informations de défaillance (742) pour obtenir des informations de défaillance indiquant qu'une défaillance s'est produite dans l'objet mobile (150, 210) ou dans l'appareil de gestion (120, 230) ; et
une section de sortie d'instruction (744) pour délivrer en sortie une instruction pour générer un signal de balise indiquant une destination de retour de l'objet mobile (150, 210) si une défaillance indiquée par les informations de défaillance obtenues par la section d'obtention d'informations de défaillance satisfait une condition prédéterminée.

5. Appareil de gestion (120, 230) selon l'une quelconque des revendications 1 à 4, dans lequel
le paramètre d'estimation comporte au moins l'un parmi (i) un paramètre indiquant une relation entre une sortie d'un capteur de vitesse de roue ou d'un codeur rotatif monté sur l'objet mobile (150, 210) et une distance de mouvement de l'objet mobile (150, 210) et (ii) un paramètre indiquant une relation entre une sortie d'un capteur gyroscopique ou d'un capteur d'accélération monté sur l'objet mobile (150, 210) et une direction de mouvement de l'objet mobile (150, 210).

6. Programme informatique comprenant des instructions pour amener l'appareil de gestion (120, 230) selon l'une quelconque des revendications 1 à 5 à réaliser chaque fonction de l'appareil de gestion (120, 230) comme dans les revendications correspondantes.

7. Système de gestion (100, 200), comprenant l'appareil de gestion (120, 230) selon l'une quelconque des revendications 1 à 5 et l'objet mobile (150, 210), dans lequel
l'objet mobile (150, 210) comporte :
une section de positionnement (166, 366) pour positionner une localisation de l'objet mobile (150, 210) ;
une section d'estimation d'auto-localisation (168, 368) pour calculer une relation de localisation relative entre une localisation de référence particulière et l'objet mobile (150, 210) sur la base d'une quantité de commande d'une section d'entraînement (154, 316, 326) de l'objet mobile et estime une localisation de l'objet mobile sur la base de la relation de localisation relative ;
une section d'obtention d'informations de retour (182, 410, 540) pour obtenir les informations de retour transmises par l'appareil de gestion ;
une section de détection de défaillance (186, 450) pour détecter qu'une défaillance s'est produite dans la section de positionnement ; et
une section de commande (188, 420) pour commander la section d'entraînement (154, 316, 326), dans lequel
une précision nominale de la section de positionnement (166, 366) est supérieure à une précision nominale de la section d'estimation d'auto-localisation (168, 368), et
la section de commande (188, 420) (i) commande la section d'entraînement (154, 316, 326) sur la base d'une localisation de l'objet mobile (150, 210) positionné par la section de positionnement (166, 366) si la section de détection de défaillance (186, 450) n'a pas détecté une défaillance de la section de positionnement (166, 366), et (ii) commande la section d'entraînement (154, 316, 326) sur la base d'une localisation de l'objet mobile estimée par la section d'estimation d'auto-localisation (168, 368) et des informations de retour obtenues par la section d'obtention d'informations de retour (182, 410, 540) si la section de détection de défaillance (186, 450) a détecté une défaillance de la section de positionnement (166, 366).

8. Système de gestion (100, 200), comprenant :
l'appareil de gestion (120, 230) selon l'une quelconque des revendications 1 à 5 ; et
l'objet mobile (150, 210), dans lequel
l'appareil de gestion (120, 230) comporte en outre une section de communication de signal de commande (124) pour transmettre un signal de commande pour commander l'objet mobile (150, 210),
l'objet mobile (150, 210) comporte :
une section d'estimation d'auto-localisation (168, 368) pour calculer une relation de localisation relative entre une localisation de référence particulière et l'objet mobile (150, 210) sur la base d'une quantité de commande d'une section d'entraînement (154, 316, 326) de l'objet mobile et estime une localisation de l'objet mobile sur la base de la relation de localisation relative ;
une section d'obtention de signal de commande (184, 410, 540) pour obtenir le signal de commande transmis par l'appareil de gestion ;
une section d'obtention d'informations de retour (182, 410, 540) pour obtenir les informations de retour transmises par l'appareil de gestion ;
une section de détection de défaillance (186, 450) pour détecter qu'une défaillance s'est produite dans l'appareil de gestion (120, 230), et/ou la section de communication de signal de commande (124) et/ou la section d'obtention de signal de commande (184, 410, 540) ; et
une section de commande (188, 420) pour commander la section d'entraînement, dans lequel
la section de commande (i) commande la section d'entraînement (154, 316, 326) sur la base du signal de commande obtenu par la section d'obtention de signal de commande (184, 410, 540) si la section de détection de défaillance (186, 450) n'a pas détecté la défaillance, et (ii) commande la section d'entraînement (154, 316, 326) sur la base d'une localisation de l'objet mobile (150, 210) estimée par la section d'estimation d'auto-localisation (168, 368) et des informations de retour obtenues par la section d'obtention d'informations de retour (182, 410, 540) si la section de détection de défaillance (186, 450) a détecté la défaillance.
